# EUROPEAN PATENT APPLICATION

(11) **EP 1 927 630 A1**
(43) Date of publication of application: **04.06.2008**
(21) Application number: 06810435.5
(22) Date of filing: 22.09.2006
(51) Int. Cl.: C08L 77/02, C08K 3/36, C08K 7/10, C08L 55/02, C08L 71/12, C08L 81/04, C08L 101/00

(54) **PLANT-BASED RESIN CONTAINING COMPOSITION AND PLANT-BASED RESIN CONTAINING MOLDED BODY USING SAME**

(30) Priority: 22.09.2005 JP 2005275328; 13.01.2006 JP 2006006518; 14.02.2006 JP 2006036920; 03.03.2006 JP 2006058116; 14.03.2006 JP 2006069659; 15.03.2006 JP 2006071538; 30.06.2006 JP 2006182155; 19.07.2006 JP 2006197073; 25.07.2006 JP 2006202293; 10.08.2006 JP 2006218483; 24.08.2006 JP 2006228106
(71) Applicant: Fujitsu Limited, Kawasaki-shi, Kanagawa 211-8588 (JP)
(72) Inventor: ISHIDUKA, Masanobu, Kanagawa 211-8588 (JP); IDO, Sachio, Kanagawa 211-8588 (JP); KIMURA, Koichi, Kanagawa 211-8588 (JP); NAKAMURA, Takamitsu, Saga-shi, Saga 840-2102, (JP); FUJIWARA, Takayuki, Kanagawa 211-8588 (JP)
(74) Representative: Wilding, Frances Ward
(86) International application number: PCT/JP2006/318822
(87) International publication number: WO 2007/034905

(57) **Abstract**

A plant-based resin-containing composition according to the present invention includes polyamide 11 and an amorphous resin. The amorphous resin is at least one resin selected from the group consisting of ABS resin, AS resin, ASA resin, polyvinyl chloride, polystyrene, polycarbonate, polymethylmethacrylate, modified polyphenylene ether, polysulfone, polyethersulfone and polyarylate. A plant-based resin-containing molded product according to the present invention is formed from the aforementioned plant-based resin-containing composition of the present invention.

## Description

### Technical Field

The present invention relates to a plant-based resin-containing composition and a plant-based resin-containing molded product formed therefrom.

### Background Art

In recent years, depletion of fossil resources as typified by petroleum due to excessive consumption and global warming resulting from increased concentration of carbon dioxide are becoming problems. Accordingly, attempts are actively made worldwide to replace general purpose resins derived from petroleum by plant-based resins derived from plants such as polylactic resin. Polylactic resin is made from plants believed not to suffer depletion such as corn, and is decomposed into harmless substances such as water and carbon dioxide by the action of microbes in soil after being discarded. In addition, the polylactic resin is a recyclable material, that is, water and carbon dioxide generated by incineration of polylactic resin are recycled back to plants again by photosynthesis, and thus has lower impact on the environment.

Recently, the use of plant-based resins composed mainly of polylactic resin for housings for electronic devices such as notebook computers and cell phones has been proposed (see Patent Document 1). Although the polylactic resin has high rigidity such as bending strength, it has poor impact resistance such as Izod impact strength, and poor heat resistance such as deflection temperature under load, and thus it is difficult to use the polylactic resin alone for housings for electronic devices. In view of this, materials produced by mixing a plant-based resin such as polylactic resin with a petroleum-based resin are being investigated. However, a material that is composed mainly of plant-based resin and satisfies the properties required for the use as a housing material has not been developed yet.

Under the circumstances, attention is given to polyamide 11, a plant-based resin having superior properties. Polyamide 11 is a plant-based resin made from vegetable oil such as castor oil, and has high chemical resistance and high heat resistance. For this reason, polyamide 11 has been conventionally used as a material primarily for automobile components, and the like. However, polyamide 11 is a crystalline resin, and has the drawback that burrs/sink marks, and the like easily occur during molding, and thus its use for the outer appearance components of products has not been reported yet.

Polyamide resin compositions that provide improved outer appearance such as surface smoothness by mixing a crystalline polyamide with an amorphous polyamide have hitherto been proposed (see Patent Document 2). Also, composite resin materials that provide improved moldability by mixing an aromatic polyamide with various resins have been proposed (see Patent Document 3).

There are other technical documents relevant to the present invention, namely, Patent Documents 4 to 23.
Patent Document 1: JP2001-244645A
Patent Document 2: JP H10-219105A
Patent Document 3: JP 2001-226557A
Patent Document 4: JP S63-277651A (Japanese Patent No. 2544315)
Patent Document 5: JP 2004-190026A
Patent Document 6: WO 98/49235
Patent Document 7: JP S64-79258A
Patent Document 8: JP H5-255585A
Patent Document 9: JP H9-124927A
Patent Document 10: JP H3-20355A
Patent Document 11: JP H5-255586A
Patent Document 12: JP 2004-83911A
Patent Document 13: JP 2003-96227A
Patent Document 14: JP 2005-232298A
Patent Document 15: JP 2005-520904A
Patent Document 16: JP 2004-35705A
Patent Document 17: JP 2004-204104A
Patent Document 18: JP 2004-339505A
Patent Document 19: JP H5-170990A
Patent Document 20: JP H9-507265A
Patent Document 21: JP H11-241020A
Patent Document 22: JP 2003-82228A
Patent Document 23: JP 2006-45390A

The polyamide resin compositions described in Patent Document 2 employ polyamide 6 (nylon 6) or polyamide 66 (nylon 66) as a crystalline polyamide, but this document is completely silent on polyamide 11, let alone on the use of polyamide 11 to form a housing for an electronic device.

Even if a molded product is formed by using a polyamide resin composition prepared by mixing polyamide 11 with an amorphous polyamide in accordance with the method of Patent Document 2, the molded product easily cause delamination, and thus sufficient resin properties cannot be obtained. This is presumably because polyamide 11, which is derived from a plant, and an amorphous polyamide that is derived from petroleum have poor compatibility with each other, which makes it difficult to yield a material in which the components are uniformly mixed. On the other hand, a crystalline polyamide and an amorphous polyamide that are both derived from petroleum have high compatibility with each other, and thus it is presumed that resin properties are improved by the method of Patent Document 2.

Furthermore, Patent Document 3 does not describe a composite resin material prepared by using polyamide 11.

### Disclosure of Invention

### Problem to be Solved by the Invention

A first plant-based resin-containing composition according to the present invention is a plant-based resin-containing composition including polyamide 11 and an amorphous resin, wherein the amorphous resin is at least one resin selected from the group consisting of ABS resin, AS resin, ASA resin, polyvinyl chloride, polystyrene, polycarbonate, polymethylmethacrylate, modified polyphenylene ether, polysulfone, polyethersulfone and polyarylate.

A second plant-based resin-containing composition according to the present invention is a plant-based resin-containing composition including polyamide 11 and an additive, wherein the additive is at least one selected from the group consisting of silica, wollastonite, vegetable fiber, glass flake, glass fiber, and talc.

Further, plant-based resin-containing molded products according to the present invention are formed from the plant-based resin-containing composition according to the present invention.

According to the present invention, it is possible to provide a plant-based resin-containing composition that has less impact on the environment and high resin properties. Further, by using the plant-based resin-containing composition of the present invention, a plant-based resin-containing molded product that has high dimensional adaptability and superior mechanical strength properties can be produced, with which outer appearance components for electronic devices such as cell phones and notebook computers can be manufactured.

### Brief Description of Drawings

[FIG. 1] FIG. 1 is a front view of a housing for a notebook computer illustrating an example of a plant-based resin-containing molded product according to the present invention.
[FIG. 2] FIG. 2 is a side view used to illustrate a horizontal combustion test method.
[FIG. 3] FIG. 3 is a schematic diagram illustrating the dispersion structure of the components included in a plant-based resin-containing composition according to Embodiment 5.
[FIG. 4] FIG. 4 is a plan view of an ASTM flexural test piece.

### Best Mode for Carrying Out the Invention

The present inventors performed intense investigation to solve the above problems, and found that the following points are effective to improve the resin properties of a resin that contains polyamide 11. The first point is to mix polyamide 11 with an amorphous resin. The second point is to add various components to a resin composition that contains polyamide 11 and an amorphous resin. Based on this finding, the present invention has been accomplished. Hereinafter, embodiments of the present invention will be described.

### (Embodiment 1)

First, a plant-based resin-containing composition according to an embodiment of the present invention will be described. The plant-based resin-containing composition of the present embodiment contains polyamide 11 and an amorphous resin. The polyamide 11 is a plant-based resin having less impact on the environment, and thus has highly excellent environmental resistance. The inclusion of the polyamide 11 can provide a plant-based resin-containing composition having less impact on the environment. Further, the combined use of the polyamide 11 and an amorphous resin can improve moldability and mechanical properties.

As used herein, the "amorphous resin" refers to a resin whose percentage of the crystals having a higher order structure in which the molecular chains are regularly arranged to each other with periodicity is smaller than that of crystalline resins. Examples thereof include ABS resin, AS resin, ASA resin, polyvinyl chloride, polystyrene, polycarbonate, polymethylmethacrylate, modified polyphenylene ether, polysulfone, polyethersulfone and polyarylate.

The amorphous resin preferably is ABS resin. This can effectively prevent the occurrence of burrs and sink marks during molding. Presumably, this is because the melt viscosity of ABS resin is higher by 1 to 2 orders of magnitude than that of polyamide 11, and by mixing polyamide 11 with ABS resin, the melt viscosity is increased as compared to that of polyamide 11, making it difficult for burrs and sink marks to occur during molding.

It is preferable that the mixing weight ratio of the polyamide 11 and the ABS resin is 7:3 to 3:7. This is because when the mixing weight ratio falls within this range, the resin properties can be improved as compared to those of polyamide 11 alone while retaining various properties of the plant-derived polyamide 11.

It is more preferable that the mixing weight ratio of the polyamide 11 and the ABS resin is 5:5 to 3:7. This can increase the deflection temperature under load of the plant-based resin-containing composition of the present embodiment to not less than 80°C. The deflection temperature under load will be described later.

It is preferable that the ABS resin has a melt viscosity of not less than 10 Pa·s and not greater than 5.0×10⁴ Pa·s, and more preferably not less than 1.0×10⁴ Pa·s and not greater than 5.0×10⁴ Pa·s. This is because when the melt viscosity falls within this range, it is possible to prevent the occurrence of burrs and sink marks during molding more effectively.

As used herein the "melt viscosity" refers to a melt viscosity obtained through measurement by the method of testing flow characteristics of plastics according to JIS K7199 using a viscosity measuring apparatus Capirograph 1B (trade name) available from Toyo Seiki Seisaku-sho, Ltd. under the conditions of a melting temperature of 230°C and a moving speed of 10 mm/min.

Further, it is preferable that the polyamide 11 has a melt viscosity of not less than 1.0 Pa·s and not greater than 5.0×10³ Pa·s. This is because polyamide 11 having a melt viscosity within this range is easily obtainable. It is more preferable that the polyamide 11 has a melt viscosity of not less than 5.0×10² Pa·s and not greater than 5.0×10³ Pa·s. This is because the higher and closer to that of the ABS resin the melt viscosity of the polyamide 11 is, the better the mixing performance of the polyamide 11 and the ABS resin, and also the higher the melt viscosity of the polyamide 11 is, the less likely that burrs and sink marks occur during molding.

It is preferable that the ABS resin is α-methylstyrene modified ABS resin or N-phenylmaleimide modified ABS resin. These modified ABS resins have high heat resistance, and thus the deflection temperature under load can be increased. Also, with a smaller amount than that of the case of using a regular ABS resin, the deflection temperature under load that is required for practical use, namely, 70°C, can be obtained. This improves the ratio of the plant-derived polyamide 11, and it is possible to provide a plant-based resin-containing composition having higher plant characteristics.

It is preferable that the plant-based resin-containing composition of the present embodiment further contains an additive such as an epoxy group-containing resin, styrene maleic acid resin or oxazoline-containing resin. The use of these additives further improves the mixing performance of the polyamide 11 and the ABS resin, and the occurrence of delamination after molding can be suppressed.

The amount of these additives to be added preferably is not less than 5 parts by weight and not greater than 40 parts by weight relative to 100 parts by weight of the total amount of the polyamide 11 and the ABS resin, and more preferably not less than 10 parts by weight and not greater than 20 parts by weight. This is because when the amount falls within this range, it is possible to improve resin properties while retaining various properties of the plant-derived polyamide 11.

As the epoxy group-containing resin, for example, an epoxy modified acrylic resin, epoxy modified styrene acrylic resin, or the like can be used.

As the oxazoline-containing resin, for example, acrylonitrile-oxazoline-styrene copolymer, styrene-oxazoline copolymer, or the like can be used.

It is preferable that the plant-based resin-containing composition of the present embodiment further contains a flame retardant. This improves flame retardancy, and thus flame spread can be suppressed. The flame retardant preferably is an organic flame retardant such as a phosphoric acid ester or triazine compound. As the phosphoric acid ester, for example, triphenyl phosphate, tricresyl phosphate, trixylenyl phosphate, or the like can be used. As the triazine compound, for example, melamine cyanurate, melamine polyphosphate, melamine, or the like can be used.

The amount of the flame retardant to be added preferably is not less than 5 parts by weight and not greater than 40 parts by weight relative to 100 parts by weight of the total amount of the polyamide 11 and the ABS resin, and more preferably, not less than 10 parts by weight and not greater than 20 parts by weight. This is because when the amount falls within this range, it is possible to improve flame retardancy while retaining various properties of the plant-derived polyamide 11.

The plant-based resin-containing composition of the present embodiment can be blended with other additives such as a plasticizer, a weather resistant modifier, an antioxidant, a heat stabilizer, a light stabilizer, an ultraviolet absorber, a lubricant, a mold release agent, a pigment, a coloring agent, an antistatic agent, a fragrance, a foaming agent, and antimicrobial/antifungal agent. The addition of these further improves the impact resistance, heat resistance, rigidity, and the like, and at the same time, other properties can be imparted. For the selection of these additives, taking the properties of the plant-derived polyamide 11 into consideration, it is preferable to select materials with less impact on the environment such as materials that are harmless to living organisms and do not emit poisonous gas by combustion.

Next, Embodiment 1 will be described in further detail with reference to examples. However, it should be noted that the present invention is not limited to the examples given below.

### (Example 1-1)

### <Production of Resin Composition>

Seventy parts by weight of high viscosity polyamide 11 Rilsan (trade name, melt viscosity: 2.0×10³ Pa·s/230°C) available from Arkema Inc. was kneaded with 30 parts by weight ofABS resin Stylac (trade name, melt viscosity: 3.0×10³ Pa·s/230°C) available from Asahi Kasei Corporation (at a mixing weight ratio of 7:3) by using a completely intermeshing co-rotating 2 bent type twin screw extruder Berstorff ZE40A (trade name) available from Technovel Corporation. After kneading, the molten material was pushed through the die of the extruder in the form of strands, water-cooled and cut by a pelletizer to produce a resin composition in the form of pellets.

### <Production of Resin Molded Product (Test Piece)>

The resin composition in the form of pellets was dried at 90°C for 5 hours, and then injection-molded by using a horizontal injection molding machine SG50-SYCAP MIII (trade name) available from Sumitomo Heavy Industries, Ltd. with a mold temperature of 60°C, a cylinder temperature of 230°C, an injection speed of 100 mm/s, a secondary pressure of 40 kgf/cm², and a cooling time of 30 seconds, so as to form an ASTM flexural test piece (12.7 mm × 127 mm × 3.2 mm). The ASTM flexural test piece was a flexural test piece according to the industrial standards D790 specified by the American Society for Testing and Material.

### (Example 1-2)

An ASTM flexural test piece was produced in the same manner as in Example 1-1, except that the mixing weight ratio of the high viscosity polyamide 11 and the ABS resin was changed to 5:5.

### (Example 1-3)

An ASTM flexural test piece was produced in the same manner as in Example 1-1, except that the mixing weight ratio of the high viscosity polyamide 11 and the ABS resin was changed to 3:7.

### (Example 1-4)

An ASTM flexural test piece was produced in the same manner as in Example 1-1, except that 70 parts by weight of low viscosity polyamide 11 Rilsan (trade name, melt viscosity: 8.0×10²Pa·s/230°C) available from Arkema Inc. was used instead of 70 parts by weight of the high viscosity polyamide 11 Rilsan.

### (Example 1-5)

An ASTM flexural test piece was produced in the same manner as in Example 1-1, except that 5 parts by weight of epoxy acrylic resin Arufon (trade name) available from Toagosei Chemical Co., Ltd. as an epoxy group-containing resin was further added to 100 parts by weight of the resin composition of Example 1-1.

### (Example 1-6)

An ASTM flexural test piece was produced in the same manner as in Example 1-1, except that 70 parts by weight of the high viscosity polyamide 11 Rilsan available from Arkema Inc. and 30 parts by weight of N-phenylmaleimide modified ABS resin Bulksum (trade name, melt viscosity: 2.0×10⁴ Pa·s/230°C) available from UMG ABS, Ltd. were mixed (at a mixing weight ratio of 7:3), to which 5 parts by weight of epoxy acrylic resin Arufon (trade name) available from Toagosei Chemical Co., Ltd. as an epoxy group-containing resin was further added.

### (Example 1-7)

An ASTM flexural test piece was produced in the same manner as in Example 1-6, except that 5 parts by weight of styrene maleic acid resin Arastar (trade name) available from Arakawa Chemical Industries, Ltd. was used instead of 5 parts by weight of the epoxy acrylic resin Arufon.

### (Example 1-8)

An ASTM flexural test piece was produced in the same manner as in Example 1-6, except that 5 parts by weight of oxazoline AS resin Epocros (trade name) available from Nippon Shokubai Co., Ltd. was used instead of 5 parts by weight of the epoxy acrylic resin Arufon.

### (Example 1-9)

An ASTM flexural test piece was produced in the same manner as in Example 1-1, except that 70 parts by weight of the high viscosity polyamide 11 Rilsan available from Arkema Inc. and 30 parts by weight of the N-phenylmaleimide modified ABS resin Bulksum available from UMG ABS, Ltd. were mixed (at a mixing weight ratio of 7:3), to which 5 parts by weight of epoxy acrylic resin Arufon available from Toagosei Chemical Co., Ltd. as an epoxy group-containing resin and 10 parts by weight of triphenyl phosphate available from Daihachi Chemical Industry Co., Ltd. as a flame retardant were further added.

### (Comparative Example 1-1)

An ASTM flexural test piece was produced in the same manner as in Example 1-1, except that only the ABS resin Stylac available from Asahi Kasei Corporation was used.

### (Comparative Example 1-2)

An ASTM flexural test piece was produced in the same manner as in Example 1-1, except that only the high viscosity polyamide 11 Rilsan available from Arkema Inc. was used.

### (Comparative Example 1-3)

An ASTM flexural test piece was produced in the same manner as in Example 1-1, except that only the low viscosity polyamide 11 Rilsan available from Arkema Inc. was used.

Table 1-1 shows the compositions of the resin compositions produced in Examples 1-1 to 1-9, and Comparative Examples 1-1 to 1-3. In Table 1-1, the polyamide 11 is expressed as PA11, the N-phenylmaleimide modifiedABS resin is expressed as heat-resistant ABS resin, the epoxy group-containing resin is expressed as epoxy, the styrene maleic acid resin is expressed as maleic acid, and the oxazoline-containing resin is expressed as oxazoline.

**[Table 1-1]**

| (Unit: part by weight) | | | | | | | | |
|---|---|---|---|---|---|---|---|---|
| | High viscosity PA11 | Low viscosity PA11 | ABS resin | Heat-resistant ABS resin | Epoxy | Maleic acid | Oxazoline | Flame retardant |
| Ex. 1-1 | 70 | 0 | 30 | 0 | 0 | 0 | 0 | 0 |
| Ex. 1-2 | 50 | 0 | 50 | 0 | 0 | 0 | 0 | 0 |
| Ex. 1-3 | 30 | 0 | 70 | 0 | 0 | 0 | 0 | 0 |
| Ex. 1-4 | 0 | 70 | 30 | 0 | 0 | 0 | 0 | 0 |
| Ex. 1-5 | 70 | 0 | 30 | 0 | 5 | 0 | 0 | 0 |
| Ex. 1-6 | 70 | 0 | 0 | 30 | 5 | 0 | 0 | 0 |
| Ex. 1-7 | 70 | 0 | 0 | 30 | 0 | 5 | 0 | 0 |
| Ex. 1-8 | 70 | 0 | 0 | 30 | 0 | 0 | 5 | 0 |
| Ex. 1-9 | 70 | 0 | 0 | 30 | 5 | 0 | 0 | 10 |
| Com. Ex. 1-1 | 0 | 0 | 100 | 0 | 0 | 0 | 0 | 0 |
| Com. Ex. 1-2 | 100 | 0 | 0 | 0 | 0 | 0 | 0 | 0 |
| Com. Ex. 1-3 | 0 | 100 | 0 | 0 | 0 | 0 | 0 | 0 |

Next, each of the ASTM test pieces of Examples 1-1 to 1-9, and Comparative Examples 1-1 to 1-3 was subjected to the following evaluation tests for resin properties.

### <Evaluation of Moldability>

Moldability was evaluated by observing each test piece for the presence/absence of burrs and sink marks. The evaluation criteria for moldability were as follows, and the results are shown by very small, small, medium or large in Table 1-2.
(1) Very small: when the maximum values of burrs/sink marks fall from 0 µm/0 µm to 30 µm/20 µm.
(2) Small: when the maximum values of burrs/sink marks fall from 31 µm/21 µm to 60 µm/30 µm.
(3) Medium: when the maximum values of burrs/sink marks fall from 61 µm/31 µm to 100 µm/40 µm.
(4) Large: when the maximum values of burrs/sink marks are not less than 101 µm/41 µm.

### <Evaluation of Surface Condition>

Surface condition was evaluated by observing the surface of each test piece. The evaluation criteria for surface condition were as follows. The results are shown by excellent, good or poor in Table 1-2.
(1) Excellent: when no delamination is observed on the surface.
(2) Good: when delamination is observed on part of the surface.
(3) Poor: when delamination is observed on most part of the surface.

**[Table 1-2]**

| | Burr | Sink mark | Surface condition |
|---|---|---|---|
| Ex. 1-1 | Medium | Medium | Poor |
| Ex. 1-2 | Medium | Small | Good |
| Ex. 1-3 | Small | Very small | Excellent |
| Ex. 1-4 | Large | Medium | Poor |
| Ex. 1-5 | Medium | Medium | Good |
| Ex. 1-6 | Very small | Small | Excellent |
| Ex. 1-7 | Very small | Small | Excellent |
| Ex. 1-8 | Very small | Small | Excellent |
| Ex. 1-9 | Small | Small | Excellent |
| Com. Ex. 1-1 | Very small | Very small | Excellent |
| Com. Ex. 1-2 | Medium | Large | Excellent |
| Com. Ex. 1-3 | Large | Large | Excellent |

### <Measurement of Flexural Strength>

Each test piece was used to measure flexural strength. Specifically, the flexural strength test was performed by using a universal tester INSTORON 5581 (trade name) available from Instron® according to Japanese Industrial Standards (JIS) K 7203 except for the size of the test pieces. The results are shown in Table 1-3 as flexural modulus of elasticity.

### <Measurement of Izod Impact Strength>

Each test piece was used to measure Izod impact strength. Specifically, the Izod impact test was performed by using an Izod impact tester B-121202403 (trade name) available from Toyo Seiki Seisaku-sho, Ltd. according to JIS K 7110 except for the size of the test pieces. The results are shown in Table 1-3.

### <Measurement of Deflection Temperature under Load>

Each test piece was used to measure deflection temperature under load. Specifically, the deflection temperature under load test was performed by using a heat distortion tester 148HD-PC (trade name) available from Yasuda Seiki Seisakusho, Ltd. according to JIS K 7207 except for the size of the test pieces. The results are shown in Table 1-3.

### <Evaluation of Flame Retardancy>

Each test piece was subjected to a flammability test. Specifically, the flammability test was performed according to UL94 vertical flammability test method by bringing the test piece into contact with about 2.0 cm flame from a burner in an UL flame test chamber (trade name: HVUL, available from Toyo Seiki, Ltd.), so as to evaluate flame retardancy. The results are shown in Table 1-3 as combustion time (s).

### <Measurement of Warpage>

The resin compositions in the form of pellets produced in Examples 1-1 to 1-9, and Comparative Examples 1-1 to 1-3 described above were dried at 90°C for 5 hours, and then injection-molded by using an injection molding machine NED 100V (trade name) available from Niigata Iron Works Ltd. with a mold temperature of 60°C, a cylinder temperature 230°C, an injection speed of 100 mm/s, a secondary pressure of 40 kgf/cm², a cooling time of 30 seconds, so as to form thin plate-like test pieces (150 mm × 100 mm × 1 mm). Each plate-like test piece was heated at 70°C for 10 minutes, and mounted on a flat substrate, and then the maximum distance between the flat substrate and the test piece was measured. The values are shown in Table 1-3 as warpage (mm).

**[Table 1-3]**

| | Mechanical properties | | | Flame retardancy | Warpage (mm) |
|---|---|---|---|---|---|
| | Flexural modulus of elasticity (GPa) | Izod impact strength (J/m) | Deflection temperature under load (°C) | Combustion time (s) | |
| Ex. 1-1 | 1.4 | 120 | 60 | 60 | 2.1 |
| Ex. 1-2 | 1.5 | 110 | 80 | 60 | 1.7 |
| Ex. 1-3 | 1.9 | 100 | 80 | 60 | 1.5 |
| Ex. 1-4 | 1.4 | 110 | 60 | 60 | 2.5 |
| Ex. 1-5 | 1.4 | 130 | 60 | 60 | 2.1 |
| Ex. 1-6 | 1.6 | 200 | 70 | 60 | 1.6 |
| Ex. 1-7 | 1.6 | 160 | 70 | 60 | 1.6 |
| Ex. 1-8 | 1.6 | 180 | 70 | 60 | 1.6 |
| Ex. 1-9 | 1.5 | 160 | 70 | 15 | 1.5 |
| Com. Ex. 1-1 | 2.3 | 200 | 85 | 60 | 1.3 |
| Com. Ex. 1-2 | 1 | 400 | 50 | 10 | 3.8 |
| Com. Ex. 1-3 | 1 | 200 | 50 | 15 | 4.2 |

Tables 1-2 and 1-3 illustrate that, for Examples 1-1 to 1-3 in which only high viscosity polyamide 11 and ABS resin were used, the moldability was increased with increasing ABS resin percentage, and the deflection temperature under load was also increased. Further, for Examples 1-2 and 1-3 in which the mixing weight ratio of high viscosity polyamide 11 and ABS resin was 5:5 and 3:7, respectively, the deflection temperature under load could be increased to not less than 80°C.

For Example 1-4 in which low viscosity polyamide 11 was used, no improvement in moldability was observed, and particularly the suppression of burrs was difficult. For Example 1-5 in which an epoxy group-containing resin was added to the composition of Example 1-1, there was a significant improvement in surface condition as compared to that of Example 1-1.

For Examples 1-6 to 1-8 in which N-phenylmaleimide modified ABS resin (heat-resistant ABS resin) was used, the moldability was further increased, and the mechanical properties were also improved significantly. For Example 1-9 in which a flame retardant was added, sufficient flame retardancy was secured. Further, for Examples 1-1 to 1-9, the warpage was reduced by half as compared to that of Comparative Examples 1-2 and 1-3.

### (Embodiment 2)

A plant-based resin-containing composition of the present embodiment contains polyamide 11, ABS resin, and a flame retardant. The polyamide 11 is a plant-based resin having less impact on the environment, and thus has highly excellent environmental resistance. The inclusion of the polyamide 11 can provide a plant-based resin-containing composition having less impact on the environment. Further, the combined use of the polyamide 11 and ABS resin, which is an amorphous resin, can improve moldability and mechanical strength properties. Further, the addition of a flame retardant improves flame retardancy, and thus the occurrence of flame spread can be suppressed.

By mixing the polyamide 11 with the ABS resin, the occurrence of burrs and sink marks during molding can be prevented effectively. Presumably, this is because the melt viscosity of ABS resin is higher by 1 to 2 orders of magnitude than that of polyamide 11, and by mixing the polyamide 11 with the ABS resin, the melt viscosity is increased as compared to that of polyamide 11 alone, making it difficult for burrs and sink marks to occur during molding.

It is preferable that the mixing weight ratio of the polyamide 11 to the ABS resin is 8:2 to 2:8, and more preferably 7:3 to 3:7. This is because when the ratio falls within this range, it is possible to improve resin properties as compared to those of polyamide 11 alone while retaining various properties of the plant-derived polyamide 11.

Further, when the mixing weight ratio of the polyamide 11 to the ABS resin is 8:2 to 6:4, moldability and environmental resistance are improved. When the mixing weight ratio of the polyamide 11 to the ABS resin is 5:5 to 2:8, the deflection temperature under load can be increased to not less than 80°C.

It is preferable that the ABS resin has a melt viscosity of not less than 10Pa·s and not greater than 5.0×10⁴ Pa·s, and more preferably not less than 1.0×10⁴ Pa·s and not greater than 5.0×10⁴ Pa·s. This is because when the melt viscosity falls within this range, it is possible to prevent the occurrence of burrs and sink marks during molding more effectively.

Further, it is preferable that the polyamide 11 has a melt viscosity of not less than 0.1 Pa·s and not greater than 2.0×10⁴ Pa·s. This is because polyamide 11 having a melt viscosity within this range is easily obtainable. It is more preferable that the polyamide 11 has a melt viscosity of not less than 5.0×10² Pa·s and not greater than 5.0×10³ Pa·s. This is because the higher and closer to that of the ABS resin the melt viscosity of the polyamide 11 is, the better the mixing performance of the polyamide 11 and the ABS resin, and also the higher the melt viscosity of the polyamide 11 is, the less likely that burrs and sink marks occur during molding.

It is preferable that the ABS resin is α-methylstyrene modified ABS resin or N-phenylmaleimide modified ABS resin. These modified ABS resins have high heat resistance, and thus the deflection temperature under load can be increased. Also, with a smaller amount than that of the case of using a regular ABS resin, the deflection temperature under load that is required for practical use, namely, 70°C, can be obtained. This improves the ratio of the plant-derived polyamide 11, and it is possible to provide a plant-based resin-containing composition having higher plant characteristics.

It is preferable that the plant-based resin-containing composition of the present embodiment further contains an additive such as an epoxy group-containing resin, styrene maleic acid resin or oxazoline-containing resin. The use of these additives further improves the mixing performance of the polyamide 11 and the ABS resin, and the occurrence of delamination after molding can be suppressed.

The amount of these additives to be added preferably is not less than 5 parts by weight and not greater than 40 parts by weight relative to 100 parts by weight of the total amount of the polyamide 11 and the ABS resin, and more preferably not less than 10 parts by weight and not greater than 20 parts by weight. This is because when the amount falls within this range, it is possible to improve resin properties while retaining various properties of the plant-derived polyamide 11.

As the epoxy group-containing resin, for example, an epoxy modified acrylic resin, epoxy modified styrene acrylic resin, or the like can be used.

As the oxazoline-containing resin, for example, acrylonitrile-oxazoline-styrene copolymer, styrene-oxazoline copolymer, or the like can be used.

The flame retardant preferably is an organic flame retardant such as a phosphorus-based flame retardant or triazine-based flame retardant. As the phosphorus-based flame retardant, for example, a phosphoric acid ester such as triphenyl phosphate, tricresyl phosphate or trixylenyl phosphate can be used. As the triazine-based flame retardant, for example, a triazine compound such as melamine cyanurate, melamine polyphosphate or melamine can be used.

The amount of the flame retardant to be added preferably is not less than 5 parts by weight and not greater than 40 parts by weight relative to 100 parts by weight of the total amount of the polyamide 11 and the ABS resin, and more preferably not less than 10 parts by weight and not greater than 20 parts by weight. This is because when the amount falls within this range, it is possible to improve flame retardancy while retaining moldability and mechanical strength properties.

It is preferable that the plant-based resin-containing composition of the present embodiment further contains a flame retardant aid. This further improves the flame retardancy. However, it is difficult to provide sufficient flame retardancy by using only a flame retardant aid, and thus the combined use of a flame retardant and a flame retardant aid is required.

As the flame retardant aid, it is preferable to use a fine platy mineral such as montmorillonite or talc, low-melting glass (glass having a melting point of 320 to 380°C), zinc borate, silicone, tetrafluoroethylene (PTFE), or the like. Particularly, montmorillonite has the effect of preventing the molten material from dropping (dripping) during combustion. Also, low-melting glass has the effect of improving rigidity by functioning as a stiffening material at room temperature, as well as the effect of improving flame retardancy by melting during combustion and forming a layer that isolates the resin surface from oxygen, and the dripping also can be suppressed.

The amount of the flame retardant aid to be added preferably is not less than 3 parts by weight and not greater than 40 parts by weight relative to 100 parts by weight of the total amount of the polyamide 11 and the ABS resin, and more preferably not less than 5 parts by weight and not greater than 20 parts by weight. This is because when the amount falls within this range, it is possible to improve flame retardancy while retaining moldability and mechanical strength properties.

The plant-based resin-containing composition of the present embodiment can be blended with other additives such as a plasticizer, a weather resistant modifier, an antioxidant, a heat stabilizer, a light stabilizer, an ultraviolet absorber, a lubricant, a mold release agent, a pigment, a coloring agent, an antistatic agent, a fragrance, a foaming agent, and an antimicrobial/antifungal agent. The addition of these further improves the impact resistance, heat resistance, rigidity, and the like, and at the same time, other properties can be imparted. For the selection of these additives, taking the properties of the plant-derived polyamide 11 into consideration, it is preferable to select materials with less impact on the environment such as materials that are harmless to living organisms and do not emit poisonous gas by combustion.

Next, Embodiment 2 will be described in further detail with reference to examples. However, it should be noted that the present invention is not limited to the examples given below.

### (Example 2-1)

### <Production of Resin Composition>

To 70 parts by weight of polyamide 11 Rilsan (trade name, melt viscosity: 1.5×10³ Pa·s/230°C) available from Arkema Inc. and 30 parts by weight ofABS resin Stylac (trade name, melt viscosity: 3.0×10³ Pa·s/230°C) available from Asahi Kasei Corporation (at a mixng weight ratio of: 7:3), 5 parts by weight of triphenyl phosphate available from Daihachi Chemical Industry Co., Ltd. was added as a flame retardant, and they were kneaded by using a completely intermeshing co-rotating 2 bent type twin screw extruder KZW15 (trade name) available from Technovel Corporation. After kneading, the molten material was pushed through the die of the extruder in the form of strands, water-cooled and cut by a pelletizer to produce a resin composition in the form of pellets.

### <Production of Resin Molded Product (Test Piece)>

The resin composition in the form of pellets was dried at 90°C for 5 hours, and then injection-molded by using a horizontal injection molding machine SG50-SYCAP MIII (trade name) available from Sumitomo Heavy Industries, Ltd. with a mold temperature of 50°C, a cylinder temperature of 230°C, an injection speed of 100 mm/s, a secondary pressure of 40 kgf/cm², and a cooling time of 30 s, so as to form an ASTM flexural test piece (12.7 mm × 127 mm × 3.2 mm).

### (Example 2-2)

An ASTM flexural test piece was produced in the same manner as in Example 2-1, except that 5 parts by weight of melamine cyanurate available from Nissan Chemical Industries, Ltd. as a flame retardant was used instead of the triphenyl phosphate.

### (Example 2-3)

An ASTM flexural test piece was produced in the same manner as in Example 2-1, except that the amount of the triphenyl phosphate added was changed to 15 parts by weight, and 5 parts by weight of montmorillonite Nanofil (trade name) available from Süd-Chemie Catalysts, Inc. as a flame retardant aid was further added.

### (Example 2-4)

An ASTM flexural test piece was produced in the same manner as in Example 2-2, except that the amount of the melamine cyanurate added was changed to 10 parts by weight, and 5 parts by weight of the montmorillonite Nanofil as a flame retardant aid was further added.

### (Example 2-5)

An ASTM flexural test piece was produced in the same manner as in Example 2-1, except that 60 parts by weight of the polyamide 11 Rilsan available from Arkema Inc., 40 parts by weight ofABS resin TM-21 (trade name, melt viscosity: 2×10³ Pa·s/230°C) available from UMG ABS Ltd. (at a mixing weight ratio of: 6:4), and 10 parts by weight of trixylenyl phosphate Kronitex TXP available from Ajinomoto Fine Techno Co., Inc. as a flame retardant were used.

### (Example 2-6)

An ASTM flexural test piece was produced in the same manner as in Example 2-5, except that 5 parts by weight of low-melting glass (melting point: about 360°C) available from Asahi Fiber Glass Co., Ltd. as a flame retardant aid was added.

### (Comparative Example 2-1)

An ASTM flexural test piece was produced in the same manner as in Example 2-1, except that the triphenyl phosphate was not added.

### (Comparative Example 2-2)

An ASTM flexural test piece was produced in the same manner as in Example 2-1, except that 2 parts by weight of the montmorillonite Nanofil as a flame retardant aid was added.

### (Comparative Example 2-3)

An ASTM flexural test piece was produced in the same manner as in Comparative Example 2-1, except that only the ABS resin Stylac was used.

### (Comparative Example 2-4)

An ASTM flexural test piece was produced in the same manner as in Comparative Example 2-1, except that only the polyamide 11 Rilsan was used.

Table 2-1 shows the compositions of the resin compositions produced in Examples 2-1 to 2-4 and Comparative Examples 2-1 to 2-4. In Table 2-1, the polyamide 11 is expressed as PA11, the triphenyl phosphate is expressed as TPP, the trixylenyl phosphate is expressed as TXP, and the melamine cyanurate is expressed as MC.

**[Table 2-1]**

| (Unit: part by weight) | | | | | | | |
|---|---|---|---|---|---|---|---|
| | PA11 | ABS resin | TPP | TXP | MC | Montmorillonite | Low-melting glass |
| Ex. 2-1 | 70 | 30 | 5 | - | - | - | - |
| Ex. 2-2 | 70 | 30 | - | - | 5 | - | - |
| Ex.2-3 | 70 | 30 | 15 | - | - | 5 | - |
| Ex.2-4 | 70 | 30 | - | - | 10 | 5 | - |
| Ex. 2-5 | 60 | 40 | - | 10 | - | - | - |
| Ex.2-6 | 60 | 40 | - | 10 | - | - | 5 |
| Com. Ex. 2-1 | 70 | 30 | - | - | - | - | - |
| Com. Ex. 2-2 | 70 | 30 | - | - | - | 2 | - |
| Com. Ex. 2-3 | - | 100 | - | - | - | - | - |
| Com. Ex. 2-4 | 100 | - | - | - | - | - | - |

Next, each of the ASTM test pieces of Examples 2-1 to 2-4, and Comparative Examples 2-1 to 2-4 was subjected to the following evaluation tests for resin properties.

First, evaluation in terms of moldability and surface condition was performed in the same manner as in Embodiment 1. The results are shown in Table 2-2.

**[Table 2-2]**

| | Burr | Sink mark | Surface condition |
|---|---|---|---|
| Ex. 2-1 | Small | Small | Excellent |
| Ex. 2-2 | Small | Small | Excellent |
| Ex. 2-3 | Small | Small | Excellent |
| Ex. 2-4 | Small | Small | Excellent |
| Ex. 2-5 | Medium | Small | Excellent |
| Ex. 2-6 | Very small | Very small | Excellent |
| Com. Ex. 2-1 | Small | Small | Excellent |
| Com. Ex. 2-2 | Medium | Medium | Excellent |
| Com. Ex. 2-3 | Very small | Very small | Excellent |
| Com. Ex. 2-4 | Large | Large | Excellent |

Next, the measurement of flexural strength (flexural modulus of elasticity), Izod impact strength, and deflection temperature under load was performed in the same manner as in Embodiment 1. The results are shown in Table 2-3.

**[Table 2-3]**

| | Mechanical strength properties | | |
|---|---|---|---|
| | Flexural modulus of elasticity (GPa) | Izod impact strength (J/m) | Deflection temperature under load (°C) |
| Ex. 2-1 | 1.4 | 120 | 60 |
| Ex. 2-2 | 1.4 | 110 | 65 |
| Ex. 2-3 | 1.4 | 120 | 60 |
| Ex. 2-4 | 1.4 | 110 | 68 |
| Ex. 2-5 | 2.0 | 120 | 60 |
| Ex. 2-6 | 2.5 | 110 | 70 |
| Com. Ex. 2-1 | 1.4 | 120 | 65 |
| Com. Ex. 2-2 | 1.2 | 120 | 45 |
| Com. Ex. 2-3 | 2.3 | 200 | 85 |
| Com. Ex. 2-4 | 1.0 | 400 | 40 |

### <Evaluation of Flame Retardancy>

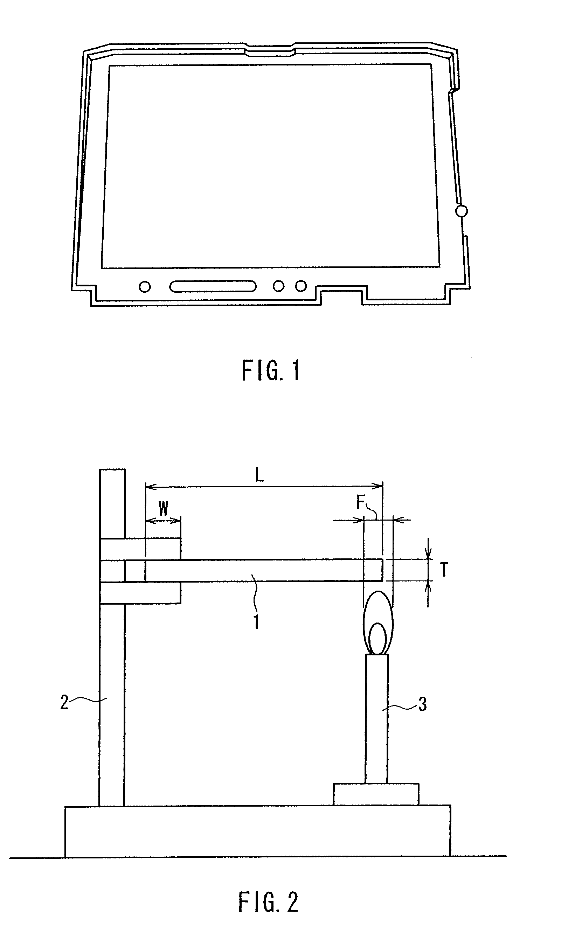

The test pieces were subjected to a horizontal flammability test to evaluate flame retardancy. Specifically, as shown in FIG. 2, a test piece 1 was fixed horizontally to a test stand 2, and the burner flame from a burner 3 was brought into contact with the test piece 1. Then, the combustion time from ignition to self-extinction, and the length of non-combusted portion after self-extinction were measured. Also, the presence/absence of dripping that the molten material of the test piece 1 dropped during combustion was observed. The thickness T of the test piece 1 was 3.2 mm, the length L was 127 mm, the holding width W was 20 mm, the flame width F to be contacted was 10 mm, and the flame contact time was 30 s. In this horizontal flammability test, when self-extinction did not occur even after 60 s, it was judged as having no self-extinction capability, and soon the flame was forcibly extinguished. The results are shown in Table 2-4.

**[Table 2-4]**

| | Combustion time (s) | Presence/absence of dripping | Length of non-combusted portion (mm) |
|---|---|---|---|
| Ex. 2-1 | 43 | Present | 88 |
| Ex. 2-2 | 32 | Present | 80 |
| Ex. 2-3 | 52 | Absent | 81 |
| Ex. 2-4 | 41 | Absent | 72 |
| Ex. 2-5 | 45 | Present | 80 |
| Ex. 2-6 | 40 | Present | 83 |
| Com. Ex. 2-1 | 60 (Forcibly extinguished) | Present | 78 |
| Com. Ex. 2-2 | 60 (Forcibly extinguished) | Absent | 61 |
| Com. Ex. 2-3 | 60 (Forcibly extinguished) | Present | 70 |
| Com. Ex. 2-4 | 15 | Present | 90 |

Tables 2-2 and 2-3 illustrate that the moldability and the mechanical strength properties of Examples 2-1 to 2-4 were improved as compared to those of Comparative Example 2-3 in which only ABS resin was used, and those of Comparative Example 2-4 in which only polyamide 11 was used. It can be seen from Table 2-4 that the combustion time of Examples 2-1 to 2-4 was shorter than that of Comparative Examples 2-1 to 2-3 in which no flame retardant was used, indicating that Examples 2-1 to 2-4 have self-extinction capability. Further, no dripping was observed for Examples 2-3 and 2-4, and Comparative Example 2-2 in which montmorillonite was added.

### (Embodiment 3)

A plant-based resin-containing composition of the present embodiment contains polyamide 11, ABS resin, and a viscosity adjusting agent. The polyamide 11 is a plant-based resin having less impact on the environment, and thus has highly excellent environmental resistance. The inclusion of the polyamide 11 can provide a plant-based resin-containing composition having less impact on the environment. Further, the combined use of the polyamide 11 and ABS resin, which is an amorphous resin, can improve moldability and mechanical strength properties. Further, the addition of a viscosity adjusting agent improves the mixing performance between the polyamide 11 and the ABS resin, and thus moldability and mechanical strength properties are further improved.

By mixing the polyamide 11 with the ABS resin, the occurrence of burrs and sink marks during molding can be prevented effectively. Presumably, this is because the melt viscosity ofABS resin is higher by 1 to 2 orders of magnitude than that of polyamide 11, and by mixing the polyamide 11 with the ABS resin, the melt viscosity is increased as compared to that of polyamide 11 alone, making it difficult for burrs and sink marks to occur during molding.

It is preferable that the mixing weight ratio of the polyamide 11 to the ABS resin is 8:2 to 2:8, and more preferably 7:3 to 3:7. This is because when the ratio falls within this range, it is possible to improve resin properties as compared to those of polyamide 11 alone while retaining various properties of the plant-derived polyamide 11.

Further, when the mixing weight ratio of the polyamide 11 to the ABS resin is 8:2 to 6:4, moldability and environmental resistance are improved. When the mixing weight ratio of the polyamide 11 to the ABS resin is 5:5 to 2:8, the deflection temperature under load can be increased to not less than 80°C.

It is preferable that the ABS resin has a melt viscosity of not less than 10 Pa·s and not greater than 5.0×10⁴ Pa·s, and more preferably not less than 1.0×10⁴ Pa·s and not greater than 5.0×10⁴ Pa·s. This is because when the melt viscosity falls within this range, it is possible to prevent the occurrence of burrs and sink marks during molding more effectively.

Further, it is preferable that the polyamide 11 has a melt viscosity of not less than 0.1 Pa·s and not greater than 2.0×10⁴ Pa·s. This is because polyamide 11 having a melt viscosity within this range is easily obtainable. It is more preferable that the polyamide 11 has a melt viscosity of not less than 5.0×10² Pa·s and not greater than 5.0×10³ Pa·s. This is because the higher and closer to that of the ABS resin the melt viscosity of the polyamide 11 is, the better the mixing performance of the polyamide 11 and the ABS resin, and also the higher the melt viscosity of the polyamide 11 is, the less likely that burrs and sink marks occur during molding.

It is preferable that the ABS resin is α-methylstyrene modified ABS resin or N-phenylmaleimide modified ABS resin. These modified ABS resins have high heat resistance, and thus the deflection temperature under load can be increased. Also, with a smaller amount than that of the case of using a regular ABS resin, the deflection temperature under load that is required for practical use, namely, 70°C, can be obtained. This improves the ratio of the plant-derived polyamide 11, and it is possible to provide a plant-based resin-containing composition having higher plant characteristics.

As the viscosity adjusting agent, a graft resin in which the main chain is polyolefin can be used. As the polyolefin serving as the main chain of the graft resin, it is possible to use ethylene-glycidyl methacrylate copolymer (EGMA), ethylene-ethyl acrylate copolymer (EEA), ethylene-acetate vinyl copolymer (EVA), ethylene-ethylacrylate-maleic anhydride copolymer (EEPJMAH), low density polyethylene (LDPE), polypropylene (PP), propylene-maleic anhydride copolymer (PP/MAH), or the like. As the resin serving as a side chain of the graft resin, it is preferable to use a resin having high mixing performace with the ABS resin, such as acrylic resin, AS resin or polystyrene.

It is preferable that the content of the viscosity adjusting agent is not less than 1 part by weight and not greater than 40 parts by weight relative to 100 parts by weight of the total amount of the polyamide 11 and the ABS resin, and more preferably not less than 5 parts by weight and not greater than 10 parts by weight. This is because, when the content is less than 1 part by weight, the effect obtainable by the addition of the viscosity adjusting agent will not be obtained, and when the content exceeds 40 parts by weight, rigidity tends to decrease.

It is preferable that the plant-based resin-containing composition of the present embodiment further contains an additive such as an epoxy group-containing resin, styrene maleic acid resin, or oxazoline-containing resin. The use of these additives further improves the mixing performance of the polyamide 11 and the ABS resin, and the occurrence of delamination after molding can be suppressed.

It is preferable that the amount of these additives to be added is not less than 5 parts by weight and not greater than 40 parts by weight relative to 100 parts by weight of the total amount of the polyamide 11 and the ABS resin, and not less than 10 parts by weight and not greater than 20 parts by weight. This is because when the amount falls within this range, it is possible to improve resin properties while retaining various properties of the plant-derived polyamide 11.

As the epoxy group-containing resin, for example, an epoxy modified acrylic resin, epoxy modified styrene acrylic resin, or the like can be used. As the oxazoline-containing resin, for example, acrylonitrile-oxazoline-styrene copolymer, styrene-oxazoline copolymer, or the like can be used.

It is preferable that the plant-based resin-containing composition of the present embodiment further contains a flame retardant. This improves flame retardancy, and thus flame spread can be suppressed. As the flame retardant, it is preferable to use an organic flame retardant such as a phosphorus-based flame retardant or triazine-based flame retardant. As the phosphorus-based flame retardant, for example, a phosphoric acid ester such as triphenyl phosphate, tricresyl phosphate or trixylenyl phosphate can be used. As the triazine-based flame retardant, for example, a triazine compound such as melamine cyanurate, melamine polyphosphate, or melamine can be used.

It is preferable that the amount of the flame retardant to be added is not less than 5 parts by weight and not greater than 40 parts by weight relative to 100 parts by weight of the total amount of the polyamide 11 and the ABS resin, and more preferably not less than 10 parts by weight and not greater than 20 parts by weight. This is because when the amount falls within this range, it is possible to improve flame retardancy while retaining moldability and mechanical strength properties.

The plant-based resin-containing composition of the present embodiment can be blended with other additives such as a plasticizer, a weather resistant a modifier, an antioxidant, a heat stabilizer, a light stabilizer, an ultraviolet absorber, a lubricant, a mold release agent, a pigment, a coloring agent, an antistatic agent, a fragrance, a foaming agent, and an antimicrobial/antifungal agent. The addition of these further improves the impact resistance, heat resistance, rigidity, and the like, and at the same time, other properties can be imparted. For the selection of these additives, taking the properties of the plant-derived polyamide 11 into consideration, it is preferable to select materials with less impact on the environment such as materials that are harmless to living organisms and do not emit poisonous gas by combustion.

Next, Embodiment 3 will be described in further detail with reference to examples. However, it should be noted that the present invention is not limited to the examples given below.

### (Example 3-1)

### <Production of Resin Composition>

To 70 parts by weight of high viscosity polyamide 11 Rilsan BESN (trade name, melt viscosity: 1.5×10³ Pa·s/230°C) available from Arkema Inc. and 30 parts by weight ofABS resin Stylac (trade name, melt viscosity: 3.0×10³ Pa·s/230°C) available from Asahi Kasei Corporation (at a mixing weight ratio of 7:3), 5 parts by weight of graft resin Modiper A4200 [trade name, main chain: ethylene-glycidyl methacrylate copolymer (EGMA), side chain: polymethylmethacrylate (PMMA)] available from NOF Corporation as a viscosity adjusting agent was added, and they were kneaded by using a completely intermeshing co-rotating 2 bent type twin screw extruder KZW15 (trade name) available from Technovel Corporation. After kneading, the molten material was pushed through the die of the extruder in the form of strands, water-cooled and cut by a pelletizer to produce a resin composition in the form of pellets.

### <Production of Resin Molded Product (Test Piece)>

The resin composition in the form of pellets was dried at 90°C for 5 hours, and then injection-molded by using a horizontal injection molding machine SG50-SYCAP MIII (trade name) available from Sumitomo Heavy Industries, Ltd. with a mold temperature of 50°C, a cylinder temperature of 230°C, an injection speed of 100 mm/s, a secondary pressure of 40 kgf/cm², and a cooling time of 30 s, so as to form an ASTM flexural test piece (12.7 mm × 127 mm × 3.2 mm).

### (Example 3-2)

An ASTM flexural test piece was produced in the same manner as in Example 3-1, except that 5 parts by weight of graft resin Modiper A8400 [trade name, main chain: ethylene-ethylacrylate-maleic anhydride copolymer (EEA/MAH), side chain: AS resin (AS)] available from NOF Corporation was used instead of the graft resin Modiper A4200.

### (Example 3-3)

An ASTM flexural test piece was produced in the same manner as in Example 3-1, except that 5 parts by weight of maleic anhydride modified polypropylene Polybond 3002 [trade name, main chain: polypropylene (PP), side chain: maleic anhydride (MAH)] available from Shiraishi Calcium Ltd. was used instead of the graft resin Modiper A4200.

### (Comparative Example 3-1)

An ASTM flexural test piece was produced in the same manner as in Example 3-1, except that the graft resin Modiper A4200 was not added.

### (Comparative Example 3-2)

An ASTM flexural test piece was produced in the same manner as in Comparative Example 3-1, except that 30 parts by weight of the high viscosity polyamide 11 Rilsan (BESN) and 70 parts by weight of the ABS resin Stylac were used.

### (Comparative Example 3-3)

An ASTM flexural test piece was produced in the same manner as in Comparative Example 3-1, except that 70 parts by weight of low viscosity polyamide 11 Rilsan (BMN) (trade name, melt viscosity: 0.8×10³ Pa·s/230°C) was used instead of the high viscosity polyamide 11 Rilsan (BESN).

### (Comparative Example 3-4)

An ASTM flexural test piece was produced in the same manner as in Comparative Example 3-1, except that only the ABS resin Stylac was used.

### (Comparative Example 3-5)

An ASTM flexural test piece was produced in the same manner as in Comparative Example 3-1, except that only the high viscosity polyamide 11 Rilsan (BESN) was used.

### (Comparative Example 3-6)

An ASTM flexural test piece was produced in the same manner as in Comparative Example 3-3, except that only the low viscosity polyamide 11 Rilsan (BMN) was used.

Table 3-1 shows the compositions of the resin compositions produced in Examples 3-1 to 3-3, and Comparative Examples 3-1 to 3-6. In Table 3-1, the high viscosity polyamide 11 is expressed as PA11H, and the low viscosity polyamide 11 is expressed as PA11L. Further, the main chain and side chain shown in Table 3-1 mean the main chain and the side chain of the graft resin used as a viscosity adjusting agent.

**[Table 3-1]**

| (Unit: part by weight) | | | | | | |
|---|---|---|---|---|---|---|
| | PA11H | PA11L | ABS resin | Viscosity adjusting agent | Main chain | Side chain |
| Ex. 3-1 | 70 | - | 30 | 5 | EGMA | PMMA |
| Ex. 3-2 | 70 | - | 30 | 5 | EEA/MAH | AS |
| Ex. 3-3 | 70 | - | 30 | 5 | PP | MAH |
| Com. Ex. 3-1 | 70 | - | 30 | - | - | - |
| Com. Ex. 3-2 | 30 | - | 70 | - | - | - |
| Com. Ex. 3-3 | - | 70 | 30 | - | - | - |
| Com. Ex. 3-4 | - | - | 100 | - | - | - |
| Com. Ex. 3-5 | 100 | - | - | - | - | - |
| Com. Ex. 3-6 | - | 100 | - | - | - | - |

Next, each of the ASTM test pieces of Examples 3-1 to 3-3, and Comparative Examples 3-1 to 3-6 was subjected to the following evaluation tests for resin properties.

First, evaluation in terms of moldability and surface condition was performed in the same manner as in Embodiment 1. The results are shown in Table 3-2.

**[Table 3-2]**

| | Burr | Sink mark | Surface condition |
|---|---|---|---|
| Ex. 3-1 | Small | Small | Excellent |
| Ex. 3-2 | Small | Small | Excellent |
| Ex. 3-3 | Medium | Medium | Excellent |
| Com. Ex. 3-1 | Medium | Medium | Poor |
| Com. Ex. 3-2 | Small | Very small | Excellent |
| Com. Ex. 3-3 | Large | Medium | Poor |
| Com. Ex. 3-4 | Very small | Very small | Excellent |
| Com. Ex. 3-5 | Medium | Large | Excellent |
| Com. Ex. 3-6 | Large | Large | Excellent |

Next, the measurement of flexural strength (flexural modulus of elasticity), Izod impact strength, and deflection temperature under load was performed in the same manner as in Embodiment 1. The results are shown in Table 3-3.

**[Table 3-3]**

| | Mechanical strength properties | | |
|---|---|---|---|
| | Flexural modulus of elasticity (GPa) | Izod impact strength (J/m) | Deflection temperature under load (°C) |
| Ex. 3-1 | 1.5 | 160 | 65 |
| Ex. 3-2 | 1.4 | 150 | 65 |
| Ex. 3-3 | 1.2 | 130 | 65 |
| Com. Ex. 3-1 | 1.4 | 120 | 65 |
| Com. Ex. 3-2 | 1.9 | 100 | 80 |
| Com. Ex. 3-3 | 1.4 | 110 | 65 |
| Com. Ex. 3-4 | 2.3 | 200 | 85 |
| Com. Ex. 3-5 | 1.0 | 400 | 45 |
| Com. Ex. 3-6 | 1.0 | 200 | 45 |

Tables 3-2 and 3-3 illustrate that for Comparative Examples 3-1 to 3-3 in which only two types of resins, namely, polyamide 11 and ABS resin, were mixed, when the content of the polyamide 11 was high, the surface condition was poor, and the occurrence of sink marks and burrs increased. Particularly, for Comparative Example 3-3 in which low viscosity polyamide 11 was used, the occurrence of burrs could not be suppressed. On the other hand, in the case of using high viscosity polyamide 11, even when the content of polyamide 11 was high as in Comparative Example 3-1, a good balance of moldability and mechanical strength properties is achieved. For Examples 3-1 to 3-3 in which a graft resin as a viscosity adjusting agent was added to the resin composition of Comparative Example 3-1, sink marks and burrs were suppressed, and at the same time, the occurrence of delamination decreased, and thus the surface condition improved dramatically. In terms of mechanical strength properties, for Examples 3-1 and 3-2, the decrease in rigidity was small, and the impact resistance was also improved significantly. However, for Example 3-3 in which a graft resin containing no styrene or acryl in the side chain was used, the effect of improving moldability was small, and the decrease in rigidity was large.

### (Embodiment 4)

A plant-based resin-containing composition of the present embodiment contains polyamide 11, ABS resin, and polycarbonate. The polyamide 11 is a plant-based resin having less impact on the environment, and thus has highly excellent environmental resistance. The inclusion of the polyamide 11 can provide a plant-based resin-containing composition having less impact on the environment. Further, the combined use of the polyamide 11 and ABS resin, which is an amorphous resin, can improve moldability and mechanical strength properties. Further, the addition of polycarbonate, which is an amorphous resin, improves hot strength (strength at high temperatures).

By mixing the polyamide 11 with the ABS resin, the occurrence of burrs and sink marks during molding can be prevented effectively. Presumably, this is because the melt viscosity ofABS resin is higher by 1 to 2 orders of magnitude than that of polyamide 11, and by mixing the polyamide 11 with the ABS resin, the melt viscosity is increased as compared to that of polyamide 11 alone, making it difficult for burrs and sink marks to occur during molding.

Further, the addition of polycarbonate to polyamide 11 and ABS resin improves hot strength. This is presumably because polycarbonate having higher hot strength is dispersed in the base material, and serves as a stiffening material.

As for the content of the above-described components, it is preferable that the content of the polyamide 11 is not less than 40 wt% and not greater than 80 wt%, the content of the ABS resin is not less than 10 wt% and not greater than 40 wt%, and the content of the polycarbonate is not less than 5 wt% and not greater than 20 wt%. When the contents fall within the above ranges, it is possible to improve resin properties as compared to those of polyamide 11 alone while retaining various properties of the plant-derived polyimide 11.

It is preferable that the ABS resin has a melt viscosity of not less than 10 Pa·s and not greater than 5.0×10⁴ Pa·s, and more preferably not less than 1.0×10⁴ Pa·s and not greater than 5.0×10⁴ Pa·s. This is because when the melt viscosity falls within this range, it is possible to prevent the occurrence of burrs and sink marks during molding more effectively.

Further, it is preferable that the polycarbonate has a melt viscosity of not less than 10 Pa·s and not greater than 5.0×10⁴ Pa·s. This is because when the melt viscosity falls within this range, favorable mixing performance with other components is obtained.

Further, it is preferable that the polyamide 11 has a melt viscosity of not less than 0.1 Pa·s and not greater than 2.0×10⁴ Pa·s. This is because polyamide 11 having a melt viscosity within this range is easily obtainable. It is more preferable that the polyamide 11 has a melt viscosity of not less than 5.0×10² Pa·s and not greater than 5.0×10³ Pa·s. This is because the higher and closer to that of the ABS resin and the polycarbonate the melt viscosity of the polyamide 11 is, the better the mixing performance of the polyamide 11, the ABS resin and the carbonate, and also the higher the melt viscosity of the polyamide 11 is, the less likely that burrs and sink marks occur during molding.

It is preferable that the ABS resin is α-methylstyrene modified ABS resin or N-phenylmaleimide modified ABS resin. These modified ABS resins have high heat resistance, and thus the deflection temperature under load can be increased. Also, with a smaller amount than that of the case of using a regular ABS resin, the deflection temperature under load that is required for practical use, namely, 70°C, can be obtained. This can increase the ratio of the plant-derived polyimide 11 while retaining hot strength, and thus it is possible to provide a plant-based resin-containing composition having higher plant characteristics.

It is preferable that the plant-based resin-containing composition of the present embodiment further contains a platy mineral. This can further increase the hot strength. As the platy mineral, it is preferable to use a finely powdered platy mineral such as montmorillonite or talc.

It is preferable that the amount of the platy mineral to be added is not less than 5 parts by weight and not greater than 40 parts by weight relative to 100 parts by weight of the total amount of the polyamide 11, the ABS resin and the polycarbonate, and more preferably not less than 10 parts by weight and not greater than 25 parts by weight. This is because when the amount falls within this range, hot strength can be improved while retaining moldability and mechanical strength properties.

It is preferable that the plant-based resin-containing composition of the present embodiment further contains a flame retardant. This improves flame retardancy, and thus flame spread can be suppressed. As the flame retardant, it is preferable to use an organic flame retardant such as a phosphorus-based flame retardant or triazine-based flame retardant. As the phosphorus-based flame retardant, for example, a phosphoric acid ester such as triphenyl phosphate, tricresyl phosphate or trixylenyl phosphate can be used. As the triazine-based flame retardant, for example, a triazine compound such as melamine cyanurate, melamine polyphosphate, or melamine can be used.

It is preferable that the amount of the flame retardant is not less than 5 parts by weight and not greater than 40 parts by weight relative to 100 parts by weight of the total weight of the polyamide 11, the ABS resin and the polycarbonate, and more preferably not less than 10 parts by weight and not greater than 20 parts by weight. This is because when the amount falls within this range, it is possible to improve flame retardancy while retaining moldability and mechanical strength properties.

It is preferable that the plant-based resin-containing composition of the present embodiment further contains an additive such as an epoxy group-containing resin, styrene maleic acid resin, or oxazoline-containing resin. The addition of these additives further improves the mixing performance with the polyamide 11, the ABS resin, and the polycarbonate, and the occurrence of delamination after molding can be suppressed.

It is preferable that the amount of these additives is not less than 5 parts by weight and not greater than 40 parts by weight relative to 100 parts by weight of the total weight of the polyamide 11, the ABS resin and the polycarbonate, and more preferably not less than 10 parts by weight and not greater than 20 parts by weight. This is because when the amount falls within this range, it is possible to improve resin properties while retaining various properties of the plant-derived polyimide 11.

As the epoxy group-containing resin, for example, an epoxy modified acrylic resin, epoxy modified styrene acrylic resin, or the like can be used. As the oxazoline-containing resin, for example, acrylonitrile-oxazoline-styrene copolymer, styrene-oxazoline copolymer, or the like can be used.

The plant-based resin-containing composition of the present embodiment can be blended with other additives such as a plasticizer, a weather resistant a modifier, an antioxidant, a heat stabilizer, a light stabilizer, an ultraviolet absorber, a lubricant, a mold release agent, a pigment, a coloring agent, an antistatic agent, a fragrance, a foaming agent, and an antimicrobial/antifungal agent. The addition of these further improves the impact resistance, heat resistance, rigidity, and the like, and at the same time, other properties can be imparted. For the selection of these additives, taking the properties of the plant-derived polyimide 11 into consideration, it is preferable to select materials with less impact on the environment such as materials that are harmless to living organisms and do not emit poisonous gas by combustion.

Next, Embodiment 4 will be described in further detail with reference to examples. However, it should be noted that the present invention is not limited to the examples given below.

### (Example 4-1)

### <Production of Resin Composition>

Seventy parts by weight of polyamide 11 Rilsan (trade name, melt viscosity: 1.5×10³ Pa·s/230°C) available from Arkema Inc., 20 parts by weight ofABS resin Stylac (trade name, melt viscosity: 3.0×10³ Pa·s/230°C) available from Asahi Kasei Corporation, and 10 parts by weight of polycarbonate Iupilon (trade name) available from Mitsubishi Engineering-Plastics Corporation were kneaded by using a completely intermeshing co-rotating 2 bent type twin screw extruder KZW15 (trade name) available from Technovel Corporation. After kneading, the molten material was pushed through the die of the extruder in the form of strands, water-cooled and cut by a pelletizer to produce a resin composition in the form of pellets.

### <Production of Resin Molded Product (Test Piece)>

The resin composition in the form of pellets was dried at 90°C for 5 hours, and then injection-molded by using a horizontal injection molding machine SG50-SYCAP MIII (trade name) available from Sumitomo Heavy Industries, Ltd. with a mold temperature of 50°C, a cylinder temperature of 230°C, an injection speed of 100 mm/s, a secondary pressure of 40 kgf/cm², and a cooling time of 30 s, so as to form an ASTM flexural test piece (12.7 mm × 127 mm × 3.2 mm).

### (Example 4-2)

An ASTM flexural test piece was produced in the same manner as in Example 1, except that 20 parts by weight of talc as a platy mineral was added to the resin composition of Example 4-1.

### (Comparative Example 4-1)

An ASTM flexural test piece was produced in the same manner as in Example 4-1, except that 70 parts by weight of the polyamide 11 Rilsan and 30 parts by weight of the ABS resin Stylac were used without the addition of the polycarbonate Iupilon.

### (Comparative Example 4-2)

An ASTM flexural test piece was produced in the same manner as in Example 4-1, except that only the polyamide 11 Rilsan was used.

### (Comparative Example 4-3)

An ASTM flexural test piece was produced in the same manner as in Example 4-1, except that only the ABS resin Stylac was used.

### (Comparative Example 4-4)

An ASTM flexural test piece was produced in the same manner as in Example 4-1, except that only the polycarbonate Iupilon was used.

Table 4-1 shows the compositions of the resin compositions produced in Examples 4-1 to 4-2, and Comparative Examples 4-1 to 4-4. In Table 4-1, the polyamide 11 is expressed as PA11, and the polycarbonate is expressed as PC.

**[Table 4-1]**

| (Unit: part by weight) | | | | |
|---|---|---|---|---|
| | PA11 | ABS resin | PC | Talc |
| Ex. 4-1 | 70 | 20 | 10 | - |
| Ex. 4-2 | 70 | 20 | 10 | 20 |
| Com. Ex. 4-1 | 70 | 30 | - | - |
| Com. Ex. 4-2 | 100 | - | - | - |
| Com. Ex. 4-3 | - | 100 | - | - |
| Com. Ex. 4-4 | - | - | 100 | - |

Next, each of the ASTM test pieces of Examples4-1 and 4-2, and Comparative Examples 4-1 to 4-4 was subjected to the following evaluation tests for resin properties.

First, evaluation in terms of moldability and surface condition was performed in the same manner as in Embodiment 1. The results are shown in Table 4-2.

**[Table 4-2]**

| | Burr | Sink mark | Surface condition |
|---|---|---|---|
| Ex. 4-1 | Small | Small | Excellent |
| Ex. 4-2 | Very small | Small | Excellent |
| Com. Ex. 4-1 | Small | Small | Excellent |
| Com. Ex. 4-2 | Large | Large | Excellent |
| Com. Ex. 4-3 | Very small | Very small | Excellent |
| Com. Ex. 4-4 | Very small | Very small | Excellent |

Next, flexural strength (flexural modulus of elasticity), Izod impact strength, deflection temperature under load, and warpage were measured in the same manner as in Embodiment 1. The results are shown in Table 4-3.

**[Table 4-3]**

| | Mechanical strength properties | | | Warpage (mm) |
|---|---|---|---|---|
| | Flexural modulus of elasticity (GPa) | Izod impact strength (J/m) | Deflection temperature under load (°C) | |
| Ex. 4-1 | 1.9 | 100 | 70 | 1.7 |
| Ex. 4-2 | 2.1 | 90 | 75 | 1.5 |
| Com. Ex. 4-1 | 1.4 | 120 | 65 | 2.0 |
| Com. Ex. 4-2 | 1.0 | 400 | 40 | 4.0 |
| Com. Ex. 4-3 | 2.3 | 200 | 85 | 1.0 |
| Com. Ex. 4-4 | 2.3 | 700 | 100 | 0.8 |

Tables 4-2 and 4-3 illustrate that, for Comparative Example 4-2 in which only polyamide 11 was used, the impact resistance (Izod impact strength) was high, but the rigidity (flexural modulus of elasticity) and the hot strength (deflection temperature under load) were low. For Comparative Example 4-1 in which ABS resin was added to polyamide 11, the rigidity and the hot strength were improved. For Example 4-1 in which polycarbonate was added to the composition of polyamide 11 and ABS resin, and Example 4-2 in which talc was further added to the composition of Example 4-1, the rigidity and the hot strength were improved further. For Examples 4-1 and 4-2, the warpage was reduced by half as compared to that of Comparative Example 4-2.

### (Embodiment 5)

A plant-based resin-containing composition of the present embodiment contains polyamide 11, ABS resin, and a layered silicate. The polyamide 11 is a plant-based resin having less impact on the environment, and thus has highly excellent environmental resistance. The inclusion of the polyamide 11 can provide a plant-based resin-containing composition having less impact on the environment. Further, the combined use of the polyamide 11, ABS resin, which is an amorphous resin, and a layered silicate can improve moldability and mechanical properties of the polyamide 11-containing resin composition.

Further, the plant-based resin-containing composition of the present embodiment is characterized in that the layered silicate is dispersed in the polyamide 11. This improves the mixing performance between the polyamide 11 and the layered silicate, and thus the effect of improving the resin properties described above obtained by the addition of the layered silicate will be exerted more efficiently.

An example of the layered silicate can be a layered phyllosilicate mineral composed of layers of magnesium silicate or aluminum silicate. Specific examples include: smectite clay minerals such as montmorillonite, saponite, beidellite, nontronite, hectorite and stevensite; vermiculite clay minerals; halloysite clay minerals; and the like. These layered silicates may be natural or synthetic. Among them, montmorillonite is particularly preferable because montmorillonite has an especially large effect of stiffening the polyamide 11.

There is no particular limitation on the method of dispersing the layered silicate uniformly in the polyamide 11, but for example, a method can be employed in which a layered silicate and a swelling agent are brought into contact with each other in advance so as to increase the interlayer spacing of the layered silicate to facilitate the intercalation of monomers in the interlayers, after which polyamide monomers and the layered silicate are mixed for polymerization (see JP S62-74957A). It is also possible to melt and knead the layered silicate and the polyamide 11 by a kneader.

It is preferable that the content of the layered silicate is not less than 0.1 parts by weight and not greater than 10 parts by weight relative to 100 parts by weight of the total amount of the polyamide 11 and the ABS resin, and more preferably not less than 3 parts by weight and not greater than 5 parts by weight. When the layered silicate content is less than 0.1 parts by weight, the effect of stiffening the polyamide 11 obtainable by the addition of the layered silicate is small, and thus a polyamide resin composition having excellent rigidity and heat resistance cannot be obtained. Conversely, when the content exceeds 10 parts by weight, the elongation properties of the polyamide resin composition will be low, and thus a molded product with a good balance of rigidity, heat resistance, and the like cannot be obtained. Particularly when the content is not less than 3 parts by weight and not greater than 5 parts by weight, the deflection temperature under load of the polyamide resin composition can be increased to not less than 80°C.

By mixing the polyamide 11 with the ABS resin, the occurrence of burrs and sink marks during molding can be prevented effectively. Presumably, this is because the melt viscosity ofABS resin is higher by 1 to 2 orders of magnitude than that of polyamide 11, and by mixing the polyamide 11 with the ABS resin, the melt viscosity is increased as compared to that of polyamide 11 alone, making it difficult for burrs and sink marks to occur during molding.

It is preferable that the mixing weight ratio of the polyamide 11 to the ABS resin is 7:3 to 3:7. When the mixing weight ratio falls within this range, it is possible to improve resin properties as compared to those of polyamide 11 alone while retaining various properties of the plant-derived polyamide 11. It is more preferable that the mixing weight ratio of the polyamide 11 and the ABS resin is 5:5 to 3:7. This can increase the deflection temperature under load of the plant-based resin-containing composition of the present embodiment to not less than 80°C.

It is preferable that the ABS resin has a melt viscosity of not less than 10 Pa·s and not greater than 5.0×10⁴ Pa·s, and more preferably not less than 1.0×10⁴ Pa·s and not greater than 5.0×10⁴ Pa·s. This is because when the melt viscosity falls within this range, it is possible to prevent the occurrence of burrs and sink marks during molding more effectively.

It is preferable that the polyamide 11 has a melt viscosity of not less than 1.0 Pa·s and not greater than 5.0×10³ Pa·s. This is because polyamide 11 having a melt viscosity within this range is easily obtainable. It is more preferable that the polyamide 11 has a melt viscosity of not less than 5.0×10² Pa·s and not greater than 5.0×10³ Pa·s. This is because the higher and closer to that of the ABS resin the melt viscosity of the polyamide 11 is, the better the mixing performance of the polyamide 11 and the ABS resin, and also the higher the melt viscosity of the polyamide 11 is, the less likely that burrs and sink marks occur during molding.

The ABS resin preferably is α-methylstyrene modified ABS resin or N-phenylmaleimide modified ABS resin. These modified ABS resins have high heat resistance, and thus the deflection temperature under load can be increased. Also, with a smaller amount than that of the case of using a regular ABS resin, the deflection temperature under load that is required for practical use, namely, 70°C, can be obtained. This improves the ratio of the plant-derived polyamide 11, and it is possible to provide a plant-based resin-containing composition having higher plant characteristics.

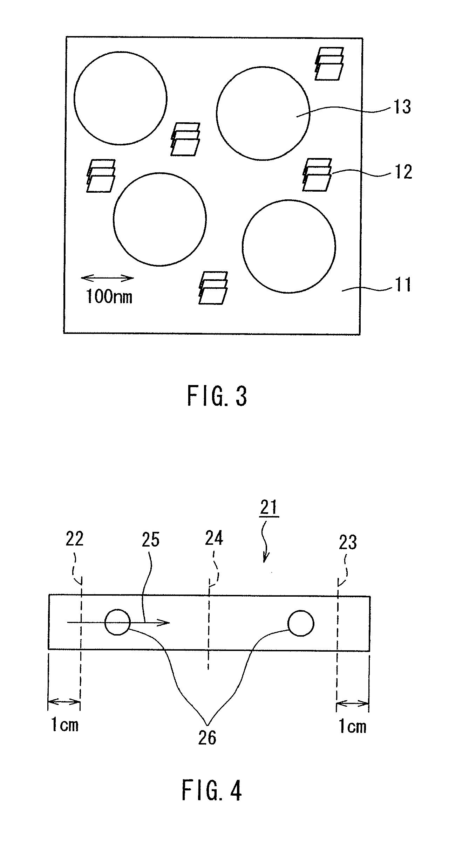

FIG. 3 shows a schematic diagram illustrating the dispersion structure of the components included in the plant-based resin-containing composition of the present embodiment. In the plant-based resin-containing composition of the present embodiment, layered silicate 12 and ABS resin 13 are dispersed in polyamide 11 resin 11. Consequently, the layered silicate 12 and the ABS resin 13 are covered by the polyamide 11 resin 11. With this dispersion structure, it is presumed that part of the polyamide 11 enters the layers of the layered silicate, and the bonding area between the ABS resin and the polyamide 11 is ncreased so that the polyamide 11 resin 11, the layered silicate 12 and the ABS resin 13 bond strongly with each other, which improves the rigidity and heat resistance of the polyamide resin composition.

It is preferable that the plant-based resin-containing composition of the present embodiment further contains an additive such as an epoxy group-containing resin, styrene maleic acid resin, or oxazoline-containing resin. The use of these additives further improves the mixing performance of the polyamide 11 and the ABS resin, and the occurrence of delamination after molding can be suppressed.

The amount of these additives to be added preferably is not less than 5 parts by weight and not greater than 40 parts by weight relative to 100 parts by weight of the total amount of the polyamide 11 and the ABS resin, and more preferably not less than 10 parts by weight and not greater than 20 parts by weight. This is because when the amount falls within this range, it is possible to improve resin properties while retaining various properties of the plant-derived polyamide 11.

As the epoxy group-containing resin, for example, an epoxy modified acrylic resin, epoxy modified styrene acrylic resin, or the like can be used. As the oxazoline-containing resin, for example, acrylonitrile-oxazoline-styrene copolymer, styrene-oxazoline copolymer, or the like can be used.

It is preferable that the plant-based resin-containing composition of the present embodiment further contains a flame retardant. This improves flame retardancy, and thus flame spread can be suppressed. As the flame retardant, it is preferable to use an organic flame retardant such as a phosphoric acid ester, or triazine compound. As the phosphoric acid ester, for example, triphenyl phosphate, tricresyl phosphate, trixylenyl phosphate, or the like can be used. As the triazine compound, for example, melamine cyanurate, melamine polyphosphate, melamine, or the like can be used.

It is preferable that the amount of the flame retardant to be added is not less than 5 parts by weight and not greater than 40 parts by weight relative to 100 parts by weight of the total amount of the polyamide 11 and the ABS resin, and more preferably not less than 10 parts by weight and not greater than 20 parts by weight. This is because when the amount falls within this range, it is possible to improve flame retardancy while retaining various properties of the plant-derived polyamide 11.

The plant-based resin-containing composition of the present embodiment can be blended with other additives such as a plasticizer, a weather resistant a modifier, an antioxidant, a heat stabilizer, a light stabilizer, an ultraviolet absorber, a lubricant, a mold release agent, a pigment, a coloring agent, an antistatic agent, a fragrance, a foaming agent, and an antimicrobial/antifungal agent. The addition of these further improves the impact resistance, heat resistance, rigidity, and the like, and at the same time, other properties can be imparted. For the selection of these additives, taking the properties of the plant-derived polyamide 11 into consideration, it is preferable to select materials with less impact on the environment such as materials that are harmless to living organisms and do not emit poisonous gas by combustion.

Next, Embodiment 5 will be described in further detail with reference to examples. However, it should be noted that the present invention is not limited to the examples given below.

### (Example 5-1)

### <Production of Resin Composition>

First, 70 parts by weight of high viscosity polyamide 11 Rilsan (trade name, melt viscosity: 2.0×10³ Pa·s/230°C) available from Arkema Inc., 30 parts by weight of ABS resin Stylac (trade name, melt viscosity: 3.0×10³ Pa·s/230°C) available from Asahi Kasei Corporation, and 6 parts by weight of high purity montmorillonite Kunipia-F (trade name) produced by purifying natural montmorillonite (interlayer Na type) from Yamagata prefecture through an elutriation process and available from Kunimine Industries Co., Ltd. as a layered silicate were prepared.

Next, 70 parts by weight of the polyamide 11 Rilsan and 6 parts by weight of the montmorillonite Kunipia-F were melted and mixed by using a completely intermeshing co-rotating 2 bent type twin screw extruder Berstorff ZE40A (trade name) available from Technovel Corporation, so as to produce a polyamide resin mixture in which the layered silicate was covered with the polyamide 11, and the polyamide 11 was intercalated into the layers of the layered silicate. After melting and mixing, the molten material was pushed through the die of the extruder in the form of strands, water-cooled and cut by a pelletizer to produce a polyamide resin composition in the form of pellets.

Subsequently, 30 parts by weight of the ABS resin Stylac was added to the above polyamide resin composition (the mixing weight ratio of the polyamide 11 to the ABS resin: 7:3), and they were melted and kneaded by using the extruder Berstorff ZE40A. After melting and kneading, the molten material was pushed through the die of the extruder in the form of strands, water-cooled and cut by a pelletizer to produce a resin composition in the form of pellets.

### <Production of Resin Molded Product (Test Piece)>

The resin composition in the form of pellets was dried at 90°C for 5 hours, and then injection-molded by using a horizontal injection molding machine SG50-SYCAP MIII (trade name) available from Sumitomo Heavy Industries, Ltd. with a mold temperature of 60°C, a cylinder temperature of 230°C, an injection speed of 100 mm/s, a secondary pressure of 40 kgf/cm², and a cooling time of 30 s, so as to form an ASTM flexural test piece (12.7 mm × 127 mm × 3.2 mm).

### (Example 5-2)

An ASTM flexural test piece was produced in the same manner as in Example 5-1, except that the amount of high purity montmorillonite Kunipia-F added was changed to 3 parts by weight.

### (Comparative Example 5-1)

An ASTM flexural test piece was produced in the same manner as in Example 5-1, except that the high purity montmorillonite Kunipia-F was not added at all.

### (Comparative Example 5-2)

An ASTM flexural test piece was produced in the same manner as in Example 5-1, except that only the ABS resin Stylac was used.

Table 5-1 shows the compositions of the resin compositions produced in Examples 5-1 to 5-2 and Comparative Examples 5-1 to 5-2. In Table 5-1, the polyamide 11 is expressed as PA11.

**[Table 5-1]**

| (Unit: part by weight) | | | |
|---|---|---|---|
| | PA11 | ABS resin | Montmorillonite |
| Ex. 5-1 | 70 | 30 | 6 |
| Ex. 5-2 | 70 | 30 | 3 |
| Com. Ex. 5-1 | 70 | 30 | - |
| Com. Ex. 5-2 | - | 100 | - |

Next, each of the ASTM test pieces of Examples 5-1 to 5-2, and Comparative Examples 5-1 to 5-2 was subjected to the following evaluation tests for resin properties.

First, evaluation in terms of moldability and surface condition was performed in the same manner as in Embodiment 1. The results are shown in Table 5-2.

**[Table 5-2]**

| | Burr | Sink mark | Surface condition |
|---|---|---|---|
| Ex. 5-1 | Small | Small | Excellent |
| Ex. 5-2 | Small | Small | Excellent |
| Com. Ex. 5-1 | Medium | Medium | Poor |
| Com. Ex. 5-2 | Very small | Very small | Excellent |

Next, the measurement of flexural strength (flexural modulus of elasticity), Izod impact strength, and deflection temperature under load was performed in the same manner as in Embodiment 1. The results are shown in Table 5-3.

**[Table 5-3]**

| | Mechanical strength properties | | |
|---|---|---|---|
| | Flexural modulus of elasticity (GPa) | Izod impact strength (J/m) | Deflection temperature under load (°C) |
| Ex. 5-1 | 1.8 | 110 | 70 |
| Ex. 5-2 | 1.5 | 120 | 60 |
| Com. Ex. 5-1 | 1.4 | 120 | 55 |
| Com. Ex. 5-2 | 1.0 | 250 | 40 |

Tables 5-2 and 5-3 illustrate that the moldability and the mechanical strength properties of Examples 5-1 and 5-2 were improved as compared to Comparative Example 5-1 in which only the polyamide 11 and the ABS resin were used, and Comparative Example 5-2 in which only the ABS resin was used.

### (Embodiment 6)

A plant-based resin-containing composition of the present embodiment contains polyamide 11, a modified polyphenylene ether, and an additive. The polyamide 11 is a plant-based resin having less impact on the environment, and thus has highly excellent environmental resistance. The inclusion of the polyamide 11 can provide a plant-based resin-containing composition having less impact on the environment. Further, the combined use of the polyamide 11 and a modified polyphenylene ether, which is an amorphous resin, can improve moldability. Further, the addition of an additive can improve various resin properties.

By mixing the polyamide 11 with the modified polyphenylene ether, the occurrence of burrs and sink marks during molding can be prevented effectively. Presumably, this is because the melt viscosity of modified polyphenylene ether is higher by 1 to 2 orders of magnitude than that of polyamide 11, and by mixing the polyamide 11 with the modified polyphenylene ether, the melt viscosity is increased as compared to that of polyamide 11 alone, making it difficult for burrs and sink marks to occur during molding.

It is preferable that the mixing weight ratio of the polyamide 11 and the modified polyphenylene ether is 8:2 to 5:5, and more preferably 7:3 to 6:4. This is because when the mixing weight ratio falls within this range, it is possible to improve resin properties as compared to those of polyamide 11 alone while retaining various properties of the plant-derived polyamide 11.

It is preferable that the modified polyphenylene ether has a melt viscosity of not less than 10 Pa·s and not greater than 5.0×10⁴ Pa·s, and more preferably not less than 1.0×10⁴ Pa·s and not greater than 5.0×10⁴ Pa·s. This is because when the melt viscosity falls within this range, it is possible to prevent the occurrence of burrs and sink marks during molding more effectively

Also, it is preferable that the polyamide 11 has a melt viscosity of not less than 1.0 Pa·s and not greater than 5.0×10³ Pa·s. This is because polyamide 11 having a melt viscosity within this range is easily obtainable. It is more preferable that the polyamide 11 has a melt viscosity of not less than 5.0×10² Pa·s and not greater than 5.0×10³ Pa·s. This is because the higher and closer to that of the modified polyphenylene ether the melt viscosity of the polyamide 11 is, the better the mixing performance of the polyamide 11 and the modified polyphenylene ether, and also the higher the melt viscosity of the polyamide 11 is, the less likely that burrs and sink marks occur during molding.

It is preferable that the modified polyphenylene ether is styrene modified polyphenylene ether. This is because styrene modified polyphenylene ether is a polymer alloy of polyphenylene ether and polystyrene, and has high compatibility with polyamide 11. The mixing weight ratio of polyphenylene ether and polystyrene in the styrene modified polyphenylene ether can be, but is not limited to, 7:3 to 8:2.

It is preferable that the additive is at least one selected from the group consisting of a filler, a viscosity adjusting agent, and a flame retardant. The addition of a filler improves mechanical strength properties. The addition of a viscosity adjusting agent improves the compatibility between the polyamide 11 and the modified polyphenylene ether, resulting in improved moldability and mechanical strength properties. The addition of a flame retardant improves flame retardancy, and thus the occurrence of flame spread can be suppressed.

As the additive, at least one resin selected from the group consisting of polyphenylene sulfide and aromatic polyamide can be used. Polyphenylene sulfide and aromatic polyamide are thermoplastic resins having a crystallization mold temperature of not less than 100°C. The addition oft least one of the above improves heat resistance. Further, polyphenylene sulfide and aromatic polyamide have an expansion coefficient of about 5×10⁵ cm/cm/°C, which is much lower than that of polyamide 11, namely, about 1×10⁶ cm/cm/°C, and therefore it is possible to suppress sink marks, warpage, and the like during injection molding. The polyphenylene sulfide and /or aromatic polyamide can be used together with the filler, viscosity adjusting agent and flame retardant mentioned above.

It is preferable that the content of the additive is not less than 5 parts by weight and not greater than 40 parts by weight relative to 100 parts by weight of the total weight of the polyamide 11 and the modified polyphenylene ether, and more preferably not less than 10 parts by weight and not greater than 20 parts by weight. This is because when the content falls within this range, it is possible to improve resin properties while retaining various properties of the plant-derived polyamide 11.

It is preferable that the filler is a platy mineral. The addition of a platy mineral further improves the mechanical strength properties. As the platy mineral, it is possible to use at least one selected from the group consisting of talc, montmorillonite, and mica.

The viscosity adjusting agent preferably is at least one selected from the group consisting of N-phenyl maleimide modified styrene resin, oxazoline-mixed styrene resin, and ethylene-glycidyl methacrylate copolymer. The addition of these improves the compatibility between the polyamide 11 and the modified polyphenylene ether, resulting in further improved moldability and mechanical strength properties.

The flame retardant preferably is at least one selected from the group consisting of a phosphorus-based flame retardant and a triazine-based flame retardant. The addition of these further improves the flame retardancy. As the phosphorus-based flame retardant, for example, it is possible to use a phosphoric acid ester such as triphenyl phosphate, tricresyl phosphate, or trixylenyl phosphate; red phosphorus; or the like can be used. As the triazine-based flame retardant, for example, melamine cyanurate, melamine polyphosphate, melamine, or the like can be used.

The plant-based resin-containing composition of the present embodiment can be blended with other additives such as a plasticizer, a weather resistant a modifier, an antioxidant, a heat stabilizer, a light stabilizer, an ultraviolet absorber, a lubricant, a mold release agent, a pigment, a coloring agent, an antistatic agent, a fragrance, a foaming agent, and an antimicrobial/antifungal agent. The addition of these further improves the impact resistance, heat resistance, rigidity, and the like, and at the same time, other properties can be imparted. For the selection of these additives, taking the properties of the plant-derived polyamide 11 into consideration, it is preferable to select materials with less impact on the environment such as materials that are harmless to living organisms and do not emit poisonous gas by combustion.

Next, Embodiment 6 will be described in further detail with reference to examples. However, it should be noted that the present invention is not limited to the examples given below.

### (Example 6-1)

### <Production of Resin Composition>

To 70 parts by weight of polyamide 11 Rilsan (trade name) available from Arkema Inc. and 30 parts by weight of modified polyphenylene ether Xyron (trade name) available from Asahi Kasei Corporation (at a mixing weight ratio of 7:3), 10 parts by weight of N-phenyl maleimide modified styrene resin Imilex (trade name) available from Nippon Shokubai Co., Ltd. as a viscosity adjusting agent was added, and they were kneaded by using a completely intermeshing co-rotating 2 bent type twin screw extruder Berstorff ZE40A (trade name) available from Technovel Corporation. After kneading, the molten material was pushed through the die of the extruder in the form of strands, water-cooled and cut by a pelletizer to produce a resin composition in the form of pellets.

### <Production of Resin Molded Product (Test Piece)>

The resin composition in the form of pellets was dried at 90°C for 5 hours, and then injection-molded by using a horizontal injection molding machine SG50-SYCAP MIII (trade name) available from Sumitomo Heavy Industries, Ltd. with a mold temperature of 60°C, a cylinder temperature of 250°C, an injection speed of 100 mm/s, a secondary pressure of 40 kgf/cm², and a cooling time of 30 seconds, so as to form an ASTM flexural test piece (12.7 mm × 127 mm × 3.2 mm).

### (Example 6-2)

An ASTM flexural test piece was produced in the same manner as in Example 6-1, except that 20 parts by weight of talc MS (trade name) available from Nippon Talc Co., Ltd. as a filler was added to the resin composition material.

### (Example 6-3)

An ASTM flexural test piece was produced in the same manner as in Example 6-1, except that 10 parts by weight of the talc MS as a filler, and 10 parts by weight of triphenyl phosphate available from Daihachi Chemical Industry Co., Ltd. as a phosphorus-based flame retardant were added to the resin composition material.

### (Example 6-4)

An ASTM flexural test piece was produced in the same manner as in Example 6-1, except that 10 parts by weight of the talc MS as a filler, and 10 parts by weight of red phosphorus Nova Pellet (trade name) available from Rinkagaku Kogyo Co., Ltd. as a phosphorus-based flame retardant were added to the resin composition material.

### (Example 6-5)

An ASTM flexural test piece was produced in the same manner as in Example 6-1, except that 10 parts by weight of the talc MS as a filler, and 10 parts by weight of melamine cyanurate available from Nissan Chemical Industries, Ltd. as a triazine-based flame retardant were added to the resin composition material.

### (Example 6-6)

An ASTM flexural test piece was produced in the same manner as in Example 6-1, except that 10 parts by weight of polyphenylene sulfide Novapps (trade name) available from Mitsubishi Engineering-Plastics Corporation was used instead of the N-phenyl maleimide modified styrene resin Imilex.

### (Example 6-7)

An ASTM flexural test piece was produced in the same manner as in Example 6-6, except that 10 parts by weight of the talc MS as a filler and 10 parts by weight of triphenyl phosphate available from Daihachi Chemical Industry Co., Ltd. as a phosphorus-based flame retardant were further added to the resin composition materials.

### (Example 6-8)

An ASTM flexural test piece was produced in the same manner as in Example 6-6, except that 10 parts by weight of talc MS as a filler and 10 parts by weight of red phosphorus Nova Pellet as a phosphorus-based flame retardant were further added to the resin composition material.

### (Example 6-9)

An ASTM flexural test piece was produced in the same manner as in Example 6-6, except that 10 parts by weight of the talc MS as a filler and 10 parts by weight of melamine cyanurate available from Nissan Chemical Industries, Ltd. as a triazine-based flame retardant were further added to the resin composition materials.

### (Comparative Example 6-1)

An ASTM flexural test piece was produced in the same manner as in Example 6-1, except that only the modified polyphenylene ether Xyron was used as a resin composition material.

### (Comparative Example 6-2)

An ASTM flexural test piece was produced in the same manner as in Example 6-1, except that only the polyamide 11 Rilsan was used as a resin composition material.

### (Comparative Example 6-3)

An ASTM flexural test piece was produced in the same manner as in Example 6-1, except that only 70 parts by weight of the polyamide 11 Rilsan and 30 parts by weight of the modified polyphenylene ether Xyron were used as a resin composition material.

Table 6-1 shows the compositions of the resin compositions produced in Examples 6-1 to 6-5 and Comparative Examples 6-1 to 6-3. In Table 6-1, the polyamide 11 is expressed as PA11, the modified polyphenylene ether is expressed as modified PPE, the N-phenyl maleimide modified styrene resin is expressed as N-PMI, the triphenyl phosphate is expressed as TPP, and the melamine cyanurate is expressed as MC.

**[Table 6-1]**

| (Unit: part by weight) | | | | | | | | |
|---|---|---|---|---|---|---|---|---|
| | PA11 | Modified PPE | N-PMI | PPS | Talc | TPP | Red phosphorus | MC |
| Ex.6-1 | 70 | 30 | 10 | - | - | - | - | - |
| Ex. 6-2 | 70 | 30 | 10 | - | 20 | - | - | - |
| Ex. 6-3 | 70 | 30 | 10 | - | 10 | 10 | - | - |
| Ex. 6-4 | 70 | 30 | 10 | - | 10 | - | 10 | - |
| Ex. 6-5 | 70 | 30 | 10 | - | 10 | - | - | 10 |
| Ex. 6-6 | 70 | 30 | - | 10 | - | - | - | - |
| Ex. 6-7 | 70 | 30 | - | 10 | 10 | 10 | - | - |
| Ex. 6-8 | 70 | 30 | - | 10 | 10 | - | 10 | - |
| Ex. 6-9 | 70 | 30 | - | 10 | 10 | - | - | 10 |
| Com. Ex. 6-1 | - | 100 | - | - | - | - | - | - |
| Com. Ex. 6-2 | 100 | - | - | - | - | - | - | - |
| Com. Ex. 6-3 | 70 | 30 | - | - | - | - | - | - |

Next, each of the ASTM test pieces of Examples 6-1 to 6-5, and Comparative Examples 6-1 to 6-3 was subjected to the following evaluation tests for resin properties.

First, evaluation in terms of moldability and surface condition was performed in the same manner as in Embodiment 1. The results are shown in Table 6-2.

**[Table 6-2]**

| | Burr | Sink mark | Surface condition |
|---|---|---|---|
| Ex. 6-1 | Medium | Medium | Excellent |
| Ex. 6-2 | Small | Medium | Excellent |
| Ex. 6-3 | Medium | Medium | Good |
| Ex. 6-4 | Small | Small | Good |
| Ex. 6-5 | Small | Small | Excellent |
| Ex. 6-6 | Small | Small | Excellent |
| Ex. 6-7 | Medium | Medium | Good |
| Ex. 6-8 | Small | Small | Good |
| Ex. 6-9 | Small | Small | Good |
| Com. Ex. 6-1 | Very small | Small | Excellent |
| Com. Ex. 6-2 | Large | Large | Excellent |
| Com. Ex. 6-3 | Medium | Medium | Poor |

Next, the measurement of flexural strength (flexural modulus of elasticity), Izod impact strength and deflection temperature under load, and the evaluation of flame retardancy were performed in the same manner as in Embodiment 1. The results are shown in Table 6-3.

**[Table 6-3]**

| | Mechanical properties | | | Flame retardancy |
|---|---|---|---|---|
| | Flexural modulus of elasticity (GPa) | Izod impact strength (J/m) | Deflection temperature under load (°C) | Combustion time (s) |
| Ex. 6-1 | 1.5 | 110 | 55 | 60 |
| Ex. 6-2 | 2.1 | 90 | 65 | 60 |
| Ex. 6-3 | 1.9 | 100 | 60 | 40 |
| Ex. 6-4 | 2.4 | 100 | 70 | 40 |
| Ex. 6-5 | 2.4 | 100 | 70 | 40 |
| Ex. 6-6 | 2.1 | 110 | 70 | 60 |
| Ex. 6-7 | 2.5 | 100 | 70 | 30 |
| Ex. 6-8 | 2.7 | 100 | 70 | 10 |
| Ex. 6-9 | 2.7 | 100 | 70 | 30 |
| Com. Ex. 6-1 | 2.1 | 200 | 80 | 40 |
| Com. Ex. 6-2 | 1.0 | 400 | 50 | 10 |
| Com. Ex. 6-3 | 1.4 | 90 | 55 | 60 |

For Comparative Example 6-3 in which only polyamide 11 and a modified polyphenylene ether were mixed, the surface condition was poor, but for Example 6-1 in which a viscosity adjusting agent (N-phenyl maleimide modified styrene resin) was added to Comparative Example 6-1, the surface condition was improved dramatically. Similarly, for Example 6-2 in which a filler (talc) was further added to Example 6-1, the flexural modulus of elasticity (rigidity) was improved significantly. Further, for Examples 6-3 to 6-5 in which a flame retardant was added, sufficient flame retardancy was secured.

### (Embodiment 7)

Next, a plant-based resin-containing molded product according to an embodiment of the present invention will be described. The plant-based resin-containing molded product of the present embodiment is a resin molded product formed from any of the plant-based resin-containing compositions of Embodiments 1 to 6. Therefore, it is possible to provide a plant-based resin-containing molded product having highly excellent environmental resistance, and high moldability and mechanical properties.

The plant-based resin-containing molded product of the present embodiment includes, for example, housings for electronic devices such as notebook computers, personal digital assistants (PDAs), cell phones, and car navigation systems. FIG. 1 is a front view of a housing for a notebook computer illustrating an example of the plant-based resin-containing molded product of the present embodiment. The housing of FIG. 1 can be formed by injection molding.

### (Embodiment 8)

Next, a plant-based resin-containing composition according to another embodiment of the present invention will be described. The resin composition of the present embodiment contains polyamide 11 and silica having an average particle size of not less than 0.01 µm and not greater than 50 µm. The polyamide 11 is a plant-based resin having less impact on the environment, and thus has highly excellent environmental resistance. The inclusion of the polyamide 11 can provide a plant-based resin-containing composition having less impact on the environment. Further, the combined use of the polyamide 11 and the silica can improve moldability as compared to that of polyamide 11 alone.

It is preferable that the silica has an average particle size of not less than 0.1 µm and not greater than 5 µm. This can further improve the moldability. When the average particle size of the silica is not less than 2 µm and not greater than 4 µm, particularly the occurrence of burrs can be suppressed.

It is preferable that the content of the silica is not less than 5 wt% and not greater than 50 wt% relative to the total weight of the resin composition, and more preferably not less than 5 wt% and not greater than 15 wt%. When the content falls within this range, moldability can be improved as compared to that of polyamide 11 alone while retaining various properties of the plant-derived polyamide 11.

Also, it is preferable that the resin composition of the present embodiment has a melt viscosity of not less than 2×10² Pa·s. This can suppress the occurrence of burrs and sink marks more effectively.

It is preferable that the silica is in the form of granules. This reduces the anisotropy of the resin composition containing the silica, and thus the size of sink marks can be reduced. It is preferable that the silica has a purity of not less than 99. 8%. This can effectively exert the bonding strength of the interface between the silica and the polyamide 11.

It is preferable that the surface of the silica is coated with an epoxy group-containing resin. This strengthens the bonding between the polyamide 11 and the silica. As the epoxy group-containing resin, for example, an epoxy modified acrylic resin, epoxy modified styrene acrylic resin, or the like can be used.

Further, it is preferable that the resin composition of the present embodiment contains an amorphous resin. This can improve mechanical properties. The amorphous resin means a resin whose percentage of the crystals having a higher order structure in which the molecular chains are regularly arranged to each other with periodicity is smaller than that of crystalline resins. Examples thereof include ABS resin, AS resin, ASA resin, polyvinyl chloride, polystyrene, polycarbonate, polymethylmethacrylate, modified polyphenylene ether, polysulfone, polyethersulfone and polyarylate.

The content of the amorphous resin preferably is not less than 30 wt% and not greater than 70 wt% relative to the total weight of the resin composition. When the content falls within this range, mechanical properties can be improved while retaining various properties of the plant-derived polyamide 11.

It is preferable to blend the resin composition of the present embodiment with a crystal nucleator in order to facilitate the crystallization of the polyamide 11 to enhance the rigidity and heat resistance. There are an organic nucleator and an inorganic nucleator as crystal nucleators. Examples of the organic nucleator include metal benzoate, and metal organophosphate. Examples of the inorganic nucleator include talc, mica, montmorillonite, and kaoline.

The resin composition of the present embodiment can be blended with additives such as a flame retardant, a conductive material, an absorbent, a plasticizer, a weather resistant modifier, an antioxidant, a heat stabilizer, a light stabilizer, an ultraviolet absorber, a lubricant, a mold release agent, a pigment, a coloring agent, an antistatic agent, a fragrance, a foaming agent, and an antimicrobial/antifungal agent. The addition of these further improves the impact resistance, heat resistance, rigidity, and the like, and at the same time, other properties can be imparted. For the selection of these additives, taking the properties of the plant-derived polyamide 11 into consideration, it is preferable to select materials with less impact on the environment such as materials that are harmless to living organisms and do not emit poisonous gas by combustion.

The resin composition of the present embodiment can be produced by mixing the above materials, followed by kneading. As the mixing method, polyamide 11 pellets and silica powders may be dry blended to mix them. Alternatively, some of the silica powders are pre-blended with the polyamide 11 pellets, and the remaining silica powders and the polyamide 11 pellets may be dry blended to mix them. As the mixer, a mill roll, Banbury mixer, super mixer, or the like can be used.

The kneading can be performed by using an extruder. As the extruder, a single screw extruder or twin screw extruder can be used, but it is preferable to use a co-rotating twin screw extruder because the polyamide 11 pellets and the silica powders can be mixed more uniformly. The melting temperature is set to 210°C to not greater than 230°C.

Further, the silica powders may be supplied to a single screw extruder or twin screw extruder by using a side feeder, or the like.

Next, Embodiment 8 will be described in further detail with reference to examples. However, it should be noted that the present invention is not limited to the examples given below.

### (Example 8-1)

### <Production of Resin Composition>

Ninety-five parts by weight of polyamide 11 pellets Rilsan BESN (trade name, extrusion molding grade) available from Arkema Inc. having been dried at 80°C for 6 hours, and 5 parts by weight of fine silica powders (average particle size: 0.15 µm, purity: 99. 9%, property: amorphous) available from C. I. Kasei Co., Ltd. were dry blended to obtain a mixture. This mixture was kneaded by using a completely intermeshing co-rotating 2 bent type twin screw extruder KZW-30MG (trade name) available from Technovel Corporation at a melting temperature of 220°C. After kneading, the molten material was pushed through the die of the extruder in the form of strands, water-cooled and cut by a pelletizer to produce pellets (resin composition).

### <Production of Resin Molded Product (Test Piece)>

The above-obtained pellets were dried at 80°C for 6 hours, and then injection-molded by using a horizontal injection molding machine SG50-SYCAP MIII (trade name) available from Sumitomo Heavy Industries, Ltd. with a mold temperature of 70°C, a cylinder temperature of 250°C, an injection speed of 10 mm/s, a holding pressure of 50 kgf/cm², and a cooling time of 30 seconds, so as to form an ASTM flexural test piece (12.7 mm × 127 mm × 3.2 mm).

### (Example 8-2)

An ASTM flexural test piece was produced in the same manner as in Example 8-1, except that 90 parts by weight of the polyamide 11 pellets and 10 parts by weight of the fine silica powders were used.

### (Example 8-3)

An ASTM flexural test piece was produced in the same manner as in Example 8-1, except that 85 parts by weight of the polyamide 11 pellets and 15 parts by weight of the fine silica powders were used, and the mold temperature was changed to 40°C.

### (Example 8-4)

An ASTM flexural test piece was produced in the same manner as in Example 8-3, except that the mold temperature was changed to 65°C.

### (Example 8-5)

An ASTM flexural test piece was produced in the same manner as in Example 8-3, except that the mold temperature was changed to 70°C.

### (Comparative Example 8-1)

An ASTM flexural test piece was produced in the same manner as in Example 8-3, except that the fine silica powders were not added at all.

### <Measurement of Melt Viscosity>

Melt viscosity was measured for the resin compositions produced in Examples 8-1 to 8-5, and Comparative Example 8-1 by the method of testing flow characteristics of plastics according to JIS K7199 using a viscosity measuring apparatus Capirograph 1B (trade name) available from Toyo Seiki Selsaku-sho, Ltd. under the conditions of a melting temperature of 230°C and a flow velocity of 10 mm/min. The results are shown in 8-1.

**[Table 8-1]**

| | Melt viscosity (Pa·s) |
|---|---|
| Ex. 8-1 | 1.7570×10³ Pa·s |
| Ex. 8-2 | 1.8230×10³ Pa·s |
| Ex. 8-3 | 1.9350×10³ Pa·s |
| Ex. 8-4 | 1.9350×10³ Pa·s |
| Ex. 8-5 | 1.9350×10³ Pa·s |
| Com. Ex. 8-1 | 1.9×10² Pa·s |

### <Measurement of Sink Mark>

Measurement of sink mark was performed for the test pieces produced in Examples 8-1 to 8-5, and Comparative Example 8-1 by using a surface profiling instrument Dektak30 30ST (trade name) available from ULVAC, Inc. Specifically, the size (maximum value) of sink marks of the gate 11 and the end 23 located 1 cm inward from the edges, respectively, in the longitudinal direction of a test piece 21 shown in FIG. 4, and of the center 24 between the gate 11 and the end 23 was masured. The measurement was performed for the front and back surfaces of the test piece. In FIG. 4, reference numeral 25 indicates the flowing direction of the resin during molding, and reference numeral 26 indicates ejection pin holes. The surface in which ejection pin holes 26 are formed is the back surface.

### <Measurement of Burr>

The burr size of the test pieces produced in Examples 8-1 to 8-5, and Comparative Example 8-1 was obtained by measuring, using a vernier caliper, the size (maximum value) of burrs of a magnified image captured by an inverse optical microscope, and dividing the obtained value by the magnification (33.5×) of the microscope.

The results obtained by the measurement of sink mark and burr are shown in Table 8-2.

**[Table 8-2]**

| | Silica amount (wt%) | Mold temperature (°C) | Sink mark on front side (µm) | | | Sink mark on back side (µm) | | | Burr (µm) |
|---|---|---|---|---|---|---|---|---|---|
| | | | End | Center | Gate | End | Center | Gate | |
| Com. Ex. 8-1 | 0 | 40 | 21.26 | 20.09 | 25.26 | 37.97 | 29.03 | 28.85 | 121.2 |
| Ex. 8-1 | 5 | 70 | 17.05 | 19.25 | 22.90 | 26.20 | 23.30 | 25.20 | 142.4 |
| Ex. 8-2 | 10 | 70 | 16.60 | 19.85 | 21.55 | 23.00 | 23.60 | 24.15 | 127.3 |
| Ex. 8-3 | 15 | 40 | 18.48 | 20.62 | 25.27 | 35.52 | 30.77 | 28.99 | 127.3 |
| Ex. 8-4 | 15 | 65 | 17.50 | 19.30 | 20.05 | 23.12 | 25.31 | 25.93 | 132.7 |
| Ex. 8-5 | 15 | 70 | 17.50 | 19.20 | 19.30 | 22.50 | 22.30 | 23.00 | 157.6 |

Table 8-2 illustrates that when the silica content was 5 to 15 wt%, and the mold temperature was not less than 65°C, the sink marks were smaller than that of the polyamide 11 alone (Comparative Example 8-1), and the sink marks were about the same size as those of the polyamide 11 alone.

### (Example 8-6)

An ASTM flexural test piece was produced in the same manner as in Example 8-1, except that 90 parts by weight of polyamide 11 pellets Rilsan BMNO (trade name, extrusion molding grade) available from Arkema Inc. having been dried at 80°C for 6 hours, and 10 parts by weight of fine silica powders (average particle size: 0.15 µm, purity: 99. 9%, property: amorphous) available from C. I. Kasei Co., Ltd. were used, and the mold temperature was changed to 40°C.

### (Example 8-7)

An ASTM flexural test piece was produced in the same manner as in Example 8-6, except that the mold temperature was changed to 70°C.

### (Comparative Example 8-2)

An ASTM flexural test piece was produced in the same manner as in Example 8-6, except that the fine silica powders were not added at all.

### <Measurement of Melt Viscosity>

Melt viscosity was measured for the resin compositions produced in Examples 8-6 and 8-7, and Comparative Example 8-2 in the same manner as described above. The results are shown in Table 8-3.

**[Table 8-3]**

| | Melt viscosity (Pa·s) |
|---|---|
| Ex. 8-6 | 4.314×10³ Pa·s |
| Ex. 8-7 | 4.314×10³ Pa·s |
| Com. Ex. 8-2 | 1.5×10² Pa·s |

### <Measurement of Sink Mark and Burr>

Measurement of sink mark and burr was performed for the test pieces produced in Examples 8-6 and 8-7, and Comparative Example 8-2 in the same manner as described above. The results are shown in 8-4.

**[Table 8-4]**

| | Silica amount (wt%) | Mold temperature (°C) | Sink mark on front side (µm) | | | Sink mark on back side (µm) | | | Burr (µm) |
|---|---|---|---|---|---|---|---|---|---|
| | | | End | Center | Gate | End | Center | Gate | |
| Com. Ex. 8-2 | 0 | 40 | 14.59 | 14.89 | 25.15 | 21.34 | 30.34 | 16.23 | 150.6 |
| Ex. 8-6 | 10 | 40 | 12.23 | 11.31 | 15.62 | 17.23 | 20.36 | 12.53 | 135.1 |
| Ex. 8-7 | 10 | 70 | 11.76 | 12.83 | 16.11 | 18.56 | 19.31 | 11.28 | 120.1 |

Table 8-4 illustrates that both sink marks and burrs of Examples 8-6 and 8-7 became smaller than those of the case of using polyamide 11 alone (Comparative Example 8-2).

### (Example 8-8)

An ASTM flexural test piece was produced in the same manner as in Example 8-1, except that 95 parts by weight of polyamide 11 pellets Rilsan BESN (trade name, extrusion molding grade) available from Arkema Inc., and 5 parts by weight of fine silica powders (average particle size: 3.1 µm) available from Tosoh Silica Corporation were used, and the fine silica powders were introduced by a side feeder instead of dry blending.

### (Example 8-9)

An ASTM flexural test piece was produced in the same manner as in Example 8-8, except that 90 parts by weight of the polyamide 11 pellets and 10 parts by weight of the fine silica powders were used.

### (Example 8-10)

An ASTM flexural test piece was produced in the same manner as in Example 8-8, except that 85 parts by weight of the polyamide 11 pellets and 15 parts by weight of the fine silica powders were used, and the mold temperature was changed to 40°C.

### (Example 8-11)

An ASTM flexural test piece was produced in the same manner as in Example 8-10, except that the mold temperature was changed to 65°C.

### (Example 8-12)

An ASTM flexural test piece was produced in the same manner as in Example 8-10, except that the mold temperature was changed to 70°C.

### <Measurement of Melt Viscosity>

Melt viscosity was measured for the resin compositions produced in Examples 8-8 to 8-12 in the same manner as described above. The results are shown in Table 8-5.

**[Table 8-5]**

| | Melt viscosity (Pa·s) |
|---|---|
| Ex. 8-8 | 1.5230×10³ Pa·s |
| Ex. 8-9 | 1.6150×10³ Pa·s |
| Ex. 8-10 | 1.7090×10³ Pa·s |
| Ex. 8-11 | 1.7090×10³ Pa·s |
| Ex. 8-12 | 1.7090×10³ Pa·s |

### <Measurement of Sink Mark and Burr>

Measurement of sink mark and burr was performed for the test pieces produced in Examples 8-8 to 8-12 in the same manner as described above. The results are shown in Table 8-6 together with the results of Comparative Example 8-1.

**[Table 8-6]**

| | Silica amount (wt%) | Mold temperature (°C) | Sink mark on front side (µm) | | | Sink mark on back side (µm) | | | Burr (µm) |
|---|---|---|---|---|---|---|---|---|---|
| | | | End | Center | Gate | End | Center | Gate | |
| Com. Ex. 8-1 | 0 | 40 | 21.26 | 20.09 | 25.26 | 37.97 | 29.03 | 28.85 | 121.2 |
| Ex. 8-8 | 5 | 70 | 20.06 | 20.41 | 23.98 | 31.08 | 27.80 | 30.88 | 139.7 |
| Ex. 8-9 | 10 | 70 | 24.42 | 25.00 | 28.41 | 46.99 | 44.25 | 47.32 | 107.5 |
| Ex. 8-10 | 15 | 40 | 25.22 | 27.01 | 28.85 | 47.21 | 45.38 | 46.67 | 120.1 |
| Ex. 8-11 | 15 | 65 | 20.31 | 20.86 | 25.21 | 30.29 | 28.61 | 27.96 | 108.2 |
| Ex. 8-12 | 15 | 70 | 19.36 | 20.57 | 23.77 | 29.03 | 27.87 | 27.82 | 107.5 |

Table 8-6 illustrates that, when the average particle size of silica is adjusted to 3.1 µm, particularly burrs become smaller, and sink marks become slightly smaller than those of the case of using polyamide 11 alone (Comparative Example 8-1).

### (Embodiment 9)

The resin composition of the present embodiment contains polyamide 11 and wollastonite. The polyamide 11 is a plant-based resin having less impact on the environment, and thus has highly excellent environmental resistance. The use of the polyamide 11 can provide a plant-based resin-containing composition having less impact on the environment. Further, the combined use of the polyamide 11 and wollastonite can improve moldability as compared to that of polyamide 11 alone. As used herein, the "wollastonite" is a white natural mineral that is fibrous or massive and has a composition of CaO·SiO₂.

It is preferable that the content of the wollastonite is not less than 5 wt% and not greater than 50 wt% relative to the total weight of the resin composition, and more preferably not less than 5 wt% and not greater than 15 wt%. This is because when the content falls within this range, it is possible to improve moldability as compared to that of polyamide 11 alone while retaining various properties of the plant-derived polyamide 11.

Further, it is preferable that the resin composition of the present embodiment has a melt viscosity of not less than 2×10² Pa·s. This can suppress burrs more effectively.

It is preferable that the wollastonite is in the form of fibers. This improves the melt viscosity of the resin composition, and it is possible to suppress burrs more effectively.

It is preferable that the wollastonite has an aspect ratio of 3 to 10, and a fiber length of 1 µm to 180 µm. When the aspect ratio is less than 3, or the fiber length is less than 1 µm, the wollastonite cannot retain its fibrous form. When the aspect ratio exceeds 10, or the fiber length exceeds 180 µm, the surface condition of the resin composition will be deteriorated when formed into a molded product.

It is preferable that the surface of the wollastonite is coated with an epoxy group-containing resin or amino silane-based resin. This strengthens the bonding between the polyamide 11 and the wollastonite, and moldability also is improved. As the epoxy group-containing resin, for example, an epoxy modified acrylic resin, epoxy modified styrene acrylic resin, or the like can be used. As the amino silane-based resin, N-2(aminoethyl)3-aminopropylmethyldimethoxysilane, N-2(aminoethyl)3-aminopropyltrimethoxysilane, N-2(aminoethyl)3-aminopropyltriethoxysilane, 3-aminopropyltrimethoxysilane, 3-aminopropyltriethoxysilane, 3-triethoxysilyl-N-(1,3-dimethyl-butylidene)propylamine, N-phenyl-3-aminopropyltrimethoxysilane, or the like can be used.

Further, similar to Embodiment 8, it is preferable that the resin composition of the present embodiment contains an amorphous resin. This can improve mechanical properties. The content of the amorphous resin preferably is not less than 10 wt% and not greater than 70 wt% relative to the total weight of the resin composition. This is because when the content falls within this range, it is possible to improve mechanical properties while retaining various properties of the plant-derived polyamide 11.

It is preferable to blend the resin composition of the present embodiment with a crystal nucleator in order to facilitate the crystallization of the polyamide 11 to enhance the rigidity and heat resistance. There are an organic nucleator and an inorganic nucleator as crystal nucleators. Examples of the organic nucleator include metal benzoate, and metal organophosphate. Examples of the inorganic nucleator include talc, mica, montmorillonite, and kaoline.

The resin composition of the present embodiment may be blended with other additives such as a flame retardant, a conductive material, an absorbent, a plasticizer, a weather resistant modifier, an antioxidant, a heat stabilizer, a light stabilizer, an ultraviolet absorber, a lubricant, a mold release agent, a pigment, a coloring agent, an antistatic agent, a fragrance, a foaming agent, and an antimicrobial/antifungal agent. The addition of these further improves the impact resistance, heat resistance, rigidity, and the like, and at the same time, other properties can be imparted. For the selection of these additives, taking the properties of the plant-derived polyamide 11 into consideration, it is preferable to select materials with less impact on the environment such as materials that are harmless to living organisms and do not emit poisonous gas by combustion.

The resin composition of the present embodiment can be produced by mixing the above materials, followed by kneading. As the mixing method, the polyamide 11 pellets and the wollastonite may be dry blended to mix them. Alternatively, some of the wollastonite is pre-blended with the polyamide 11 pellets, and the remaining wollastonite and the polyamide 11 pellets may be dry blended to mix them. As the mixer, a mill roll, Banbury mixer, super mixer, or the like can be used.

The kneading can be performed by using an extruder. As the extruder, a single screw extruder or twin screw extruder can be used, but it is preferable to use a co-rotating twin screw extruder because the polyamide 11 pellets and the wollastonite can be mixed more uniformly The melting temperature is set to 210°C to not greater than 230°C.

Further, the wollastonite may be supplied to a single screw extruder or twin screw extruder by using a side feeder, or the like.

Next, Embodiment 9 will be described in further detail with reference to examples. However, it should be noted that the present invention is not limited to the examples given below.

### (Example 9-1)

### <Production of Resin Composition>

Ninety-five parts by weight of polyamide 11 pellets Rilsan BESN (trade name, extrusion molding grade) available from Arkema Inc. having been dried at 80°C for 6 hours, and 5 parts by weight of wollastonite coated with an epoxy group-containing resin PH-450 [E070] (trade name) available from Kawatetsu Mining Company Ltd. were dry blended to obtain a mixture. This mixture was kneaded by using a completely intermeshing co-rotating 2 bent type twin screw extruder KZW-30MG (trade name) available from Technovel Corporation at a melting temperature 220°C. After kneading, the molten material was pushed through the die of the extruder in the form of strands, water-cooled and cut by a pelletizer to produce pellets (resin composition).

### <Production of Resin Molded Product (Test Piece)>

The above pellets were dried at 80°C for 6 hours, and then injection-molded by using a horizontal injection molding machine SG50-SYCAP MIII (trade name) available from Sumitomo Heavy Industries, Ltd. with a mold temperature of 70°C, a cylinder temperature of 240°C, an injection speed of 50 mm/s, a holding pressure of 40 kgf/cm², and a cooling time of 30 seconds, so as to form an ASTM flexural test piece (12.7 mm × 127 mm × 3.2 mm).

### (Example 9-2)

An ASTM flexural test piece was produced in the same manner as in Example 9-1, except that 90 parts by weight of the polyamide 11 pellets and 10 parts by weight of the wollastonite PH-450 [E070] were used, and the mold temperature was changed to 40°C.

### (Example 9-3)

An ASTM flexural test piece was produced in the same manner as in Example 9-2, except that the mold temperature was changed to 65°C.

### (Example 9-4)

An ASTM flexural test piece was produced in the same manner as in Example 9-2, except that the mold temperature was changed to 70°C.

### (Example 9-5)

An ASTM flexural test piece was produced in the same manner as in Example 9-1, except that 90 parts by weight of the polyamide 11 pellets was used, and 10 parts by weight of wollastonite coated with an amino silane-based resin PH-450 [A070] (trade name) available from Kawatetsu Mining Company Ltd. was used instead of 5 parts by weight of the wollastonite PH-450 [E070].

### (Example 9-6)

An ASTM flexural test piece was produced in the same manner as in Example 9-1, except that 90 parts by weight of the polyamide 11 pellets was used, and 10 parts by weight of uncoated wollastonite PH-450 (trade name) available from Kawatetsu Mining Company Ltd. was used instead of 5 parts by weight of the wollastonite PH-450 [E070].

### (Example 9-7)

An ASTM flexural test piece was produced in the same manner as in Example 9-1, except that 85 parts by weight of the polyamide 11 pellets and 15 parts by weight of the wollastonite PH-450 [E070] were used.

### (Comparative Example 9-1)

An ASTM flexural test piece was produced in the same manner as in Example 9-2, except that the wollastonite was not added at all.

### <Measurement of Melt Viscosity>

Melt viscosity was measured for the resin compositions produced in Examples 9-1 to 9-7, and Comparative Example 9-1 in the same manner as in Embodiment 8. The results are shown in Table 9-1.

**[Table 9-1]**

| | Melt viscosity (Pa·s) |
|---|---|
| Ex. 9-1 | 1.3380×10³ Pa·s |
| Ex. 9-2 | 1.7820×10³ Pa·s |
| Ex. 9-3 | 1.7820×10³ Pa·s |
| Ex. 9-4 | 1.7820×10³ Pa·s |
| Ex. 9-5 | 1.7350×10³ Pa·s |
| Ex. 9-6 | 1.6130×10³ Pa·s |
| Ex. 9-7 | 2.1680×10³ Pa·s |
| Com. Ex. 9-1 | 1.9×10² Pa·s |

### <Measurement of Sink Mark and Burr>

Measurement of sink mark and burr was performed for the test pieces produced in Examples 9-1 to 9-7, and Comparative Example 9-1 in the same manner as in Embodiment 8. The results are shown in 9-2. In Table 9-2, the amount of the wollastonite added is expressed as WN amount (wt%).

**[Table 9-2]**

| | WN amount (wt%) | Mold temperature (°C) | Sink mark on front side (µm) | | | Sink mark on back side (µm) | | | Burr (µm) |
|---|---|---|---|---|---|---|---|---|---|
| | | | End | Center | Gate | End | Center | Gate | |
| Com. Ex. 9-1 | 0 | 40 | 21.26 | 20.09 | 25.26 | 37.97 | 29.03 | 28.85 | 121.2 |
| Ex. 9-1 | 5 | 70 | 21.53 | 22.20 | 26.73 | 36.02 | 35.55 | 43.28 | 103.3 |
| Ex. 9-2 | 10 | 40 | 23.58 | 23.37 | 25.16 | 32.91 | 32.40 | 30.65 | 167.2 |
| Ex. 9-3 | 10 | 65 | 25.12 | 24.76 | 26.27 | 33.85 | 33.96 | 36.32 | 82.3 |
| Ex. 9-4 | 10 | 70 | 24.69 | 24.36 | 26.83 | 33.65 | 33.64 | 37.74 | 81.5 |
| Ex. 9-5 | 10 | 70 | 24.06 | 22.57 | 25.78 | 36.98 | 30.87 | 33.06 | 107.5 |
| Ex. 9-6 | 10 | 70 | 26.93 | 23.43 | 38.72 | 37.15 | 28.39 | 20.24 | 110.2 |
| Ex. 9-7 | 15 | 70 | 30.71 | 29.51 | 30.17 | 36.60 | 37.58 | 44.10 | 86.9 |

Table 9-2 illustrates that burrs became smaller in Examples 9-1 to 9-7 in which wollastonite was added than those of Comparative Example 9-1 in which polyamide 11 alone was used, and the sink marks were about the same size as those of Comparative Example 9-1. The comparison between Examples 9-2 to 9-4 in which the mold temperature was changed shows that when the mold temperature is not less than 65°C, burrs become very small. Further, the comparison between Examples 9-4 to 9-6 in which the morphology of wollastonite was changed shows that wollastonite coated with an epoxy group-containing resin is most effective in suppressing burrs, and wollastonite coated with an amino silane-based resin is the second most effective.

### (Embodiment 10)

A plant-based resin-containing composition of the present embodiment contains polyamide 11 and vegetable fiber. The polyamide 11 is a plant-based resin having less impact on the environment, and thus has highly excellent environmental resistance. The inclusion of the polyamide 11 can provide a plant-based resin-containing composition having less impact on the environment. Further, the inclusion of vegetable fiber can improve heat resistance.

It is preferable the mixing weight ratio of the polyamide 11 to the vegetable fiber is 9:1 to 5:5. When the mixing weight ratio falls within this range, it is possible to improve heat resistance while retaining the environmental resistance of the plant-based resin-containing composition.

As the vegetable fiber, for example, it is possible to use, but not limited to, at least one selected from cellulose acetate fiber, wood fiber, kenaf and linen. Among them, cellulose acetate fiber is most preferable. This is because the inclusion of cellulose acetate fiber can further improve the heat resistance and flame retardancy of the plant-based resin-containing composition.

As for the fiber diameter and fiber length of the vegetable fiber, for example, in the case of cellulose acetate fiber, the fiber diameter can be 0.01 to 1 µm and the fiber length can be 1 to 100 µm. In the case of kenaf, the fiber diameter can be 1 to 100 µm and the fiber length can be 1 to 10 mm. In the case of linen, the fiber diameter can be 1 to 100 µm and the fiber length can be 1 to 10 mm. When using wood flour as the wood fiber, its particle size can be 1 to 100 µm. The fiber diameter and particle size can be measured by an electron microscope, optical microscope, or the like.

The plant-based resin-containing composition of the present embodiment may be used in the form of pellets obtained by melting and kneading the polyamide 11 and the vegetable fiber.

It is preferable that the vegetable fiber is covered by polyolefin. This improves the mixing performance between the polyamide 11 and the vegetable fiber, and at the same time, flame retardancy also is improved. Generally, the melting point of polyolefin is lower than that (180 to 190°C) of polyamide 11, and therefore it is possible to decrease the melt viscosity when mixing the polyamide 11 and the vegetable fiber, enabling melting and mixing at lower temperatures, and suppressing the pyrolysis of the polyamide 11. Further, because polyolefin has low hygroscopicity, it is possible to prevent the mixed vegetable fiber from absorbing water, and thus a resin material that is stable to water can be provided.

As the polyolefin, for example, it is possible to use, but not limited to, polyethylene, polypropylene, or the like. As the polyolefin, a modified polyolefin, such as maleic anhydride modified polyethylene or maleic anhydride modified polypropylene, is more preferable. This is because modified polyolefin has higher mixing performance with polyamide 11 and a significant effect of preventing the vegetable fiber from absorbing water, and can impart flexibility to the plant-based resin composition.

As the method of covering the vegetable fiber with the polyolefin, a method may be employed in which the vegetable fiber and the polyolefin in the form of pellets or powders are melted and kneaded by a kneader to form pellets or powders, after which polyamide 11 and the obtained pellets or powders are melted and kneaded by a kneader, followed by the same procedure as described previously to obtain pellets. In the case of powdered polyolefin, the vegetable fiber and the polyolefin powders are mixed and stirred, and then compressed by a heat press machine or the like, and the resultant is cut and pulverized, and then melted and kneaded with polyamide 11 in the same manner as described above.

It is preferable that the plant-based resin-containing composition of the present embodiment further contains a flame retardant. This improves flame retardancy, and thus flame spread can be suppressed.

It is preferable that the content of the flame retardant is not less than 5 wt% and not greater than 15 wt% relative to the total weight of the plant-based resin-containing composition. When the content falls within this range, it is possible to improve flame retardancy while retaining the environmental resistance and heat resistance of the plant-based resin-containing composition.

As the flame retardant, it is preferable to use an organic flame retardant such as a phosphorus-based flame retardant, or triazine-based flame retardant. As the phosphorus-based flame retardant, for example, a phosphoric acid ester such as triphenyl phosphate, tricresyl phosphate, or trixylenyl phosphate can be used. As the triazine-based flame retardant, for example, a triazine compound such as melamine cyanurate, melamine polyphosphate, or melamine can be used.

It is preferable that the plant-based resin-containing composition of the present embodiment further contains a flame retardant aid. This further improves the flame retardancy. However, it is difficult to provide sufficient flame retardancy by using only a flame retardant aid, and thus the combined use of a flame retardant and a flame retardant aid is required.

The flame retardant aid preferably is a fine platy mineral such as montmorillonite, or talc. Particularly, montmorillonite has the effect of preventing the molten material from dropping (dripping) during combustion.

In the case where the plant-based resin-containing composition of the present embodiment contains the aforementioned polyolefin, by adding red phosphorus, graphite, magnesium hydroxide, or the like as the flame retardant aid, flame retardancy is further improved.

It is preferable that the amount of the flame retardant aid to be added is not less than 5 wt% and not greater than 15 wt% relative to the total weight of the plant-based resin-containing composition. When the amount falls within this range, the flame retardancy can be improved while retaining the environmental resistance and heat resistance of the plant-based resin-containing composition.

The plant-based resin-containing composition of the present embodiment may be blended with additional additives such as a plasticizer, a weather resistant modifier, an antioxidant, a heat stabilizer, a light stabilizer, an ultraviolet absorber, a lubricant, a mold release agent, a pigment, a coloring agent, an antistatic agent, a fragrance, a foaming agent, and an antimicrobial/antifungal agent. The addition of these further improves the impact resistance, heat resistance, rigidity, and the like, and at the same time, other properties can be imparted. For the selection of these additives, taking the properties of the plant-derived polyamide 11 into consideration, it is preferable to select materials with less impact on the environment such as materials that are harmless to living organisms and do not emit poisonous gas by combustion.

Next, Embodiment 10 will be described in further detail with reference to examples. However, it should be noted that the present invention is not limited to the examples given below.

### (Example 10-1)

### <Production of Resin Composition>

Ninety parts by weight of polyamide 11 Rilsan B (trade name) available from Arkema Inc., and 10 parts by weight of cellulose-acetate fiber Celgreen (trade name, average fiber diameter: 3 µm, average fiber length: 20 µm) available from Daicel Chemical Industries, Ltd. as the vegetable fiber were melted and kneaded by using a completely intermeshing co-rotating 2 bent type twin screw extruder KZW15 (trade name) available from Technovel Corporation. After kneading, the molten material was pushed through the die of the extruder in the form of strands, water-cooled and cut by a pelletizer to produce a resin composition in the form of pellets.

### <Production of Resin Molded Product (Test Piece)>

The resin composition in the form of pellets was dried at 90°C for 5 hours, and then injection-molded by using a horizontal injection molding machine SG50-SYCAP MIII (trade name) available from Sumitomo Heavy Industries, Ltd. with a mold temperature of 40°C, a cylinder temperature of 210°C, an injection speed of 50 mm/s, a secondary pressure of 40 kgf/cm², and a cooling time of 30 s, so as to form an ASTM flexural test piece (12.7 mm × 127 mm × 3.2 mm).

### (Example 10-2)

An ASTM flexural test piece was produced in the same manner as in Example 10-1, except that 70 parts by weight of the polyamide 11 and 30 parts by weight of the cellulose-acetate fiber were used.

### (Example 10-3)

An ASTM flexural test piece was produced in the same manner as in Example 10-1, except that 50 parts by weight of the polyamide 11 and 50 parts by weight of the cellulose-acetate fiber were used.

### (Example 10-4)

An ASTM flexural test piece was produced in the same manner as in Example 10-2, except that 30 parts by weight of shavings (particle size: 10 µm to 1 mm) ofAkita cedar was used as wood fiber instead of the cellulose-acetate fiber.

### (Example 10-5)

An ASTM flexural test piece was produced in the same manner as in Example 10-4, except that 65 parts by weight of the polyamide 11, 25 parts by weight of the wood fiber, and 10 parts by weight of triphenyl phosphate available from Daihachi Chemical Industry Co., Ltd. as a flame retardant were used.

### (Example 10-6)

An ASTM flexural test piece was produced in the same manner as in Example 10-2, except that 30 parts by weight of linen (average fiber diameter: 60 µm, average fiber length: 5 mm) was used instead of the cellulose-acetate fiber.

### (Example 10-7)

Fifty parts by weight of maleic anhydride modified polyethylene Polybond (trade name) available from Shiraishi Calcium Ltd., and 50 parts by weight of shavings (particle size: 10 µm to 1 mm) ofAkita cedar as wood fiber were melted and kneaded by using a completely intermeshing co-rotating 2 bent type twin screw extruder KZW15 (trade name) available from Technovel Corporation. After kneading, the molten material was pushed through the die of the extruder in the form of strands, water-cooled and cut by a pelletizer to produce a resin composition A in the form of pellets.

Next, 40 parts by weight of polyamide 11 Rilsan B (trade name) available from Arkema Inc., 50 parts by weight of the resin composition A, and 10 parts by weight of triphenyl phosphate available from Daihachi Chemical Industry Co., Ltd. as a flame retardant were melted and kneaded by using the completely intermeshing co-rotating 2 bent type twin screw extruder KZW15. After kneading, the molten material was pushed through the die of the extruder in the form of strands, water-cooled and cut by a pelletizer to produce a resin composition B in the form of pellets.

An ASTM flexural test piece was produced in the same manner as in Example 10-1, except that the above resin composition B was used.

### (Example 10-8)

An ASTM flexural test piece was produced in the same manner as in Example 10-7, except that 25 parts by weight of linen (average fiber diameter: 60 µm, average fiber length: 5 mm) was used instead of the wood fiber, 10 parts by weight of melamine cyanurate available from Nissan Chemical Industries, Ltd. was used instead of the triphenyl phosphate.

### (Comparative Example 10-1)

An ASTM flexural test piece was produced in the same manner as in Example 10-1, except that only the polyamide 11 was used, and the vegetable fiber was not added.

### (Comparative Example 10-2)

An ASTM flexural test piece was produced in the same manner as in Example 10-1, except that only the cellulose-acetate fiber was used, and the polyamide 11 was not added.

### (Comparative Example 10-3)

An ASTM flexural test piece was produced in the same manner as in Comparative Example 10-1, except that only ABS resin Stylac (trade name) available from Asahi Kasei Corporation was used.

### (Comparative Example 10-4)

An ASTM flexural test piece was produced in the same manner as in Comparative Example 10-1, except that only polycarbonate Panlite (trade name) available from Teijin Ltd. was used.

Table 10-1 shows the compositions of the resin compositions produced in Examples 10-1 to 10-8, and Comparative Examples 10-1 to 10-4. In Table 10-1, the polyamide 11 is expressed as PA11, the cellulose-acetate fiber is expressed as CA, the polycarbonate is expressed as PC, the wood fiber is expressed as wood flour, the maleic anhydride modified polyethylene is expressed as PE/MAH, the triphenyl phosphate is expressed as TPP, and the melamine cyanurate is expressed as MC.

**[Table 10-1]**

| (Unit: part by weight) | | | | | | | | | |
|---|---|---|---|---|---|---|---|---|---|
| | PA11 | CA | ABS | PC | Wood flour | Linen | PE/MAH | TPP | MC |
| Ex. 10-1 | 90 | 10 | - | - | - | - | - | - | - |
| Ex. 10-2 | 70 | 30 | - | - | - | - | - | - | - |
| Ex. 10-3 | 50 | 50 | - | - | - | - | - | - | - |
| Ex. 10-4 | 70 | - | - | - | 30 | - | - | - | - |
| Ex. 10-5 | 65 | - | - | - | 25 | - | - | 10 | - |
| Ex. 10-6 | 70 | - | - | - | - | 30 | - | - | - |
| Ex. 10-7 | 40 | - | - | - | 25 | - | 25 | 10 | - |
| Ex. 10-8 | 40 | - | - | - | - | 25 | 25 | - | 10 |
| Com. Ex. 10-1 | 100 | - | - | - | - | - | - | - | - |
| Com. Ex. 10-2 | - | 100 | - | - | - | - | - | - | - |
| Com. Ex. 10-3 | - | - | 100 | - | - | - | - | - | - |
| Com. Ex. 10-4 | - | - | | 100 | - | - | - | - | - |

Next, each of the ASTM test pieces of Examples 10-1 to 10-8, and Comparative Examples 10-1 to 10-4 was subjected to the following evaluation tests for resin properties.

### <Measurement of Flexural Strength>

Each test piece was used to measure flexural strength. Specifically, the flexural strength test was performed by using a universal tester INSTORON 5581 (trade name) available from Instron® according to JIS K 7203 except for the size of the test pieces. Also, each test piece was completely immersed in distilled water, allowed to stand in a room held at 23°C and having a relative humidity of 45% for 24 hours, and subjected to the flexural strength test after water absorption. The results are shown in Table 10-2 as flexural modulus of elasticity.

### <Measurement of Izod Impact Strength>

Each test piece was used to measure Izod impact strength. Specifically, the Izod impact test was performed by using an Izod impact tester B-121202403 (trade name) available from Toyo Seiki Seisaku-sho, Ltd. according to JIS K 7110 except for the size of the test pieces. The results are shown in Table 10-2.

### <Measurement of Deflection Temperature under Load>

Each test piece was used to measure deflection temperature under load. Specifically, the deflection temperature under load test was performed by using a heat distortion tester 148HD-PC (trade name) available from Yasuda Seiki Seisakusho, Ltd. according to JIS K 7207 except for the size of the test pieces. The results are shown in Table 10-2.

**[Table 10-2]**

| | Mechanical strength properties | | | |
|---|---|---|---|---|
| | Flexural modulus of elasticity (GPa) | Modulus of elasticity after water absorption (GPa) | Izod impact strength (J/m) | Deflection temperature under load (°C) |
| Ex. 10-1 | 1.2 | 1.0 | 200 | 50 |
| Ex. 10-2 | 1.5 | 1.3 | 50 | 60 |
| Ex. 10-3 | 2.1 | 1.6 | 35 | 80 |
| Ex. 10-4 | 1.5 | 1.0 | 30 | 50 |
| Ex. 10-5 | 1.5 | 1.0 | 30 | 50 |
| Ex. 10-6 | 1.4 | 1.1 | 40 | 55 |
| Ex. 10-7 | 1.2 | 1.2 | 70 | 50 |
| Ex. 10-8 | 1.2 | 1.2 | 60 | 55 |
| Com. Ex. 10-1 | 1.0 | 0.8 | 400 | 40 |
| Com. Ex. 10-2 | 2.0 | 1.5 | 200 | 80 |
| Com. Ex. 10-3 | 2.3 | 2.2 | 200 | 90 |
| Com. Ex. 10-4 | 2.5 | 2.4 | 30 | 95 |

### <Evaluation of Flame Retardancy>

The test pieces used above and test pieces in which only the length was different were subjected to a horizontal flammability test to evaluate flame retardancy. Specifically, as shown in FIG. 2, a test piece 1 was fixed horizontally to a test stand 2, and the burner flame from a burner 3 was brought into contact with the test piece 1. Then, the combustion time from ignition to self-extinction, and the length of non-combusted portion after self-extinction were measured. Also, the presence/absence of dripping that the molten material of test piece 1 dropped during combustion was observed. The thickness T of the test piece 1 was 3.2 mm, the length L was 127 mm, the holding width W was 20 mm, the flame width F to be contacted was 10 mm, and the flame contact time was 30 s. In this horizontal flammability test, when self extinction did not occur even after 60 s, it was judged as having no self-extinction capability, and soon the flame was forcibly extinguished. The results are shown in Table 10-3.

**[Table 10-3]**

| | Combustion time (s) | Presence/absence of dripping | Length of non-combusted portion (mm) |
|---|---|---|---|
| Ex. 10-1 | 10 | Present | 90 |
| Ex. 10-2 | 10 | Slightly present | 95 |
| Ex. 10-3 | 5 | Absent | 105 |
| Ex. 10-4 | 60 | Slightly present | 80 |
| Ex. 10-5 | 30 | Slightly present | 90 |
| Ex. 10-6 | 60 | Slightly present | 90 |
| Ex. 10-7 | 30 | Slightly present | 90 |
| Ex. 10-8 | 30 | Slightly present | 95 |
| Com. Ex. 10-1 | 10 | Present | 110 |
| Com. Ex. 10-2 | 1 | Absent | 115 |
| Com. Ex. 10-3 | 60 (Forcibly extinguished) | Present | 70 |
| Com. Ex. 10-4 | 1 | Absent | 110 |

Table 10-2 illustrates that the deflection temperature under load (heat resistance) of Examples 10-1 to 10-8, in which vegetable fiber was added, was improved as compared to that of Comparative Example 10-1 in which only polyamide 11 was used. It can also be seen that the flexural modulus of elasticity (rigidity) of Examples 10-1 to 10-6 in which vegetable fiber was added was larger than that of Comparative Example 10-1 in which only polyamide 11 was used, and the rigidity increased as an increased content of the vegetable fiber. However, the rigidity after water absorption of Examples 10-1 to 10-6 decreased. On the other hand, the rigidity after water absorption of Examples 10-7 and 10-8 in which vegetable fiber was covered with maleic anhydride modified polyethylene in advance did not decrease. Also, it can be seen from Table 10-3 that the flame retardancy of Examples 10-1 to 10-3 in which cellulose-acetate fiber was used, and Examples 10-5, 10-7 and 10-8 in which a flame retardant was added was improved.

### (Embodiment 11)

The resin composition of the present embodiment contains polyamide 11 and a glass flake. The polyamide 11 is a plant-based resin having less impact on the environment, and thus has highly excellent environmental resistance. The use of the polyamide 11 can provide a resin composition having less impact on the environment. Further, the combined use of the polyamide 11 and a glass flake can improve moldability as compared to that of polyamide 11 alone.

It is preferable that the glass flake has an average particle size of not less than 10 µm and not greater than 50 µm. When the average particle size is less than 10 µm, the effect obtainable by the addition of the glass flake will be small. When the average particle size exceeds 50 µm, the surface condition of the resin composition will be deteriorated when formed into a molded product. It should be noted that the average particle size used herein is measured by a laser diffraction/scattering type particle size distribution measuring apparatus.

It is preferable that the content of the glass flake is not less than 5 wt% and not greater than 50 wt% relative to the total weight of the resin composition, and more preferably not less than 5 wt% and not greater than 40 wt%. When the content falls within this range, it is possible to improve moldability as compared to that of polyamide 11 alone while retaining various properties of the plant-derived polyamide 11.

Further, it is preferable that the resin composition of the present embodiment has a melt viscosity of not less than 2×10² Pa·s. This can suppress burrs effectively.

Further, it is preferable that the glass flake has a thickness of not less than 1 µm and not greater than 10 µm. When the thickness is less than 1 µm, it will be difficult for the glass flake to retain its shape. When the thickness exceeds 10 µm, the surface condition of the resin composition will be deteriorated when formed into a molded product.

It is preferable that the surface of the glass flake is coated with an epoxy group-containing resin or amino silane-based resin. This strengthens the bonding between the polyamide 11 and the glass flake, and moldability also is improved. As the epoxy group-containing resin, for example, an epoxy modified acrylic resin, epoxy modified styrene acrylic resin, or the like can be used. As the amino silane-based resin, N-2(aminoethyl)3-aminopropylmethyldimethoxysilane, N-2(aminoethyl)3-aminopropyltrimethoxysilane, N-2(aminoethyl)3-aminopropyltriethoxysilane, 3-aminopropyltrimethoxysilane, 3-aminopropyltriethoxysilane, 3-triethoxysilyl-N-(1,3-dimethyl-butylidene)propylamine, N-phenyl-3-aminopropyltrimethoxysilane, or the like can be used.

Further, similar to Embodiment 8, it is preferable that the resin composition of the present embodiment contains an amorphous resin. This can improve mechanical properties. The content of the amorphous resin preferably is not less than 10 wt% and not greater than 30 wt% relative to the total weight of the resin composition. This is because when the content falls within this range, it is possible to improve mechanical properties while retaining various properties of the plant-derived polyamide 11.

It is preferable to blend the resin composition of the present embodiment with a crystal nucleator in order to facilitate the crystallization of the polyamide 11 to enhance the rigidity and heat resistance. There are an organic nucleator and an inorganic nucleator as crystal nucleators. Examples of the organic nucleator include metal benzoate, and metal organophosphate. Examples of the inorganic nucleator include talc, mica, montmorillonite, and kaoline.

The resin composition of the present embodiment can be blended with other additives such as a flame retardant, a conductive material, an absorbent, plasticizer, a weather resistant modifier, an antioxidant, a heat stabilizer, a light stabilizer, an ultraviolet absorber, a lubricant, a mold release agent, a pigment, a coloring agent, an antistatic agent, a fragrance, a foaming agent, and an antimicrobial/antifungal agent. The addition of these additives further improves the impact resistance, heat resistance, rigidity, and the like, and at the same time, other properties can be imparted. For the selection of these additives, taking the properties of the plant-derived polyamide 11 into consideration, it is preferable to select materials with less impact on the environment such as materials that are harmless to living organisms and do not emit poisonous gas by combustion.

The resin composition of the present embodiment can be produced by mixing the above materials, followed by kneading. As the mixing method, the polyamide 11 pellets and the glass flake may be dry blended to mix them. Alternatively, some of the glass flake is pre-blended with the polyamide 11 pellets, and the remaining glass flake and the polyamide 11 pellets are dry blended to mix them. As the mixer, a mill roll, Banbury mixer, super mixer, or the like can be used.

The kneading can be performed by using an extruder. As the extruder, a single screw extruder or twin screw extruder can be used, but it is preferable to use a co-rotating twin screw extruder because the polyamide 11 pellets and the glass flake can be mixed more uniformly. The melting temperature is set to 210°C to not greater than 230°C.

Further, the glass flake may be supplied to a single screw extruder or twin screw extruder by using a side feeder, or the like.

Next, Embodiment 11 will be described in further detail with reference to examples. However, it should be noted that the present invention is not limited to the examples given below.

### (Example 11-1)

### <Production of Resin Composition>

Ninety-five parts by weight of polyamide 11 pellets Rilsan BESN (trade name, extrusion molding grade) available from Arkema Inc. having been dried at 80°C for 6 hours, and 5 parts by weight of glass flake powders REF-015 (trade name, average particle size: 15 µm) available from Nippon Sheet Glass Co., Ltd. were dry blended to obtain a mixture. This mixture was kneaded by using a completely intermeshing co-rotating 2 bent type twin screw extruder KZW-30MG (trade name) available from Technovel Corporation at a melting temperature of 230°C. After kneading, the molten material was pushed through the die of the extruder in the form of strands, water-cooled and cut by a pelletizer to produce pellets (resin composition).

### <Production of Resin Molded Product (Test Piece)>

The above pellets were dried at 80°C for 6 hours, and then injection-molded by using a horizontal injection molding machine SG50-SYCAP MIII (trade name) available from Sumitomo Heavy Industries, Ltd. with a mold temperature of 70°C, a cylinder temperature of 250°C, an injection speed of 10 mm/s, a holding pressure of 40 kgf/cm², and a cooling time of 30 seconds, so as to form an ASTM flexural test piece (12.7 mm × 127 mm × 3.2 mm).

### (Example 11-2)

An ASTM flexural test piece was produced in the same manner as in Example 11-1, except that 90 parts by weight of the polyamide 11 pellets and 10 parts by weight of the glass flake powders REF-015 were used, and the holding pressure was changed to 45 kgf/cm².

### (Example 11-3)

An ASTM flexural test piece was produced in the same manner as in Example 11-1, except that 80 parts by weight of the polyamide 11 pellets and 10 parts by weight of the glass flake powder REF-015 were dry blended to mix them, to which a predetermined amount of the glass flake powders was added during kneading by using a side feeder, and the injection speed was changed to 50 mm/s.

### (Comparative Example 11-1)

An ASTM flexural test piece was produced in the same manner as in Example 11-1, except that the glass flake was not added at all, and the mold temperature was changed to 40°C.

### (Comparative Example 11-2)

An ASTM flexural test piece was produced in the same manner as in Example 11-1, except that glass flake powders REF-160 (trade name) having an average particle size of 160 µm available from Nippon Sheet Glass Co., Ltd. was used instead of the glass flake powders REF-015 having an average particle size of 15 µm.

### <Measurement of Melt Viscosity>

Melt viscosity was measured for the resin compositions produced in Examples 11-1 to 11-3, and Comparative Examples 11-1 to 11-2 in the same manner as in Embodiment 8. The results are shown in Table 11-1.

**[Table 11-1]**

| | Melt viscosity (Pa·s) |
|---|---|
| Ex. 11-1 | 2.6×10³ Pa·s |
| Ex. 11-2 | 2.6×10³ Pa·s |
| Ex. 11-3 | 2.6×10³ Pa·s |
| Com. Ex. 11-1 | 1.9×10² Pa·s |
| Com. Ex. 11-2 | 2.8×10³ Pa·s |

### <Measurement of Glass Flake Content>

The amount of glass flake added when producing the resin composition and the final content of the glass flake after the production of a resin molded product may not be the same. Particularly when mixing and kneading is performed by supplying the glass flake by using a side feeder, the amount of glass flake supplied by a side feeder is not constant, and therefore it is necessary to check the final content. In view of this, the content of the glass flake of the test pieces was measured.

The content of the glass flake of a test piece was determined by measuring the density of the glass flake added and the density of the test piece, followed by calculation. The densities were measured by using a gas displacement type density analyzer AccuPyc 1330 (trade name) available from Micromeritics Instrument Corporation. The results are shown in Table 11-2.

### <Measurement of Sink Mark>

Measurement of sink mark was performed for the test pieces produced in Examples 11-1 to 11-3, and Comparative Example 11-1 and 11-2 by using a surface profiling instrument Dektak30 30ST (trade name) available from ULVAC, Inc. The measurement was performed for the front surface (the side having no ejection pin holes) and the back surface (the side face having ejection pin holes) of the test piece.

### <Measurement of Burr>

The burr size of the test pieces produced in Examples 11-1 to 11-3, and Comparative Examples 11-1 and 11-2 was obtained by measuring, using a vernier caliper, the size (maximum value) of burrs of a magnified image captured by an inverse optical microscope, and dividing the obtained value by the magnification (33.5x) of the microscope.

The results obtained by the measurement of sink mark and burr are shown in Table 11-2. In Table 11-2, the content of the glass flake is expressed as GF amount (wt%).

**[Table 11-2]**

| | GF amount (wt%) | Mold temperature | Sink mark (µm) | | Burr (µm) |
|---|---|---|---|---|---|
| | | | Front | Back | |
| Com. Ex. 11-1 | 0 | 40 | 21 | 38 | 121 |
| Ex. 11-1 | 6 | 70 | 19 | 41 | 96 |
| Ex. 11-2 | 10 | 70 | 24 | 27 | 107 |
| Ex. 11-3 | 40 | 70 | 23 | 37 | 72 |
| Com. Ex. 11-2 | 6 | 70 | 30 | 45 | 153 |

Table 11-2 illustrates that for Examples 11-1 to 11-3 in which the glass flake having an average particle size of not greater than 50 µm was added, the burrs became smaller than those of Comparative Example 11-1 in which only polyamide 11 was used, and Comparative Example 11-2 in which the glass flake having an average particle size of over 50 µm was added, and the sink marks were about the same size as those of Comparative Examples.

### (Embodiment 12)

The plant-based resin-containing composition of the present embodiment contains polyamide 11, polyphenylene sulfide, and glass fiber. The polyamide 11 is a plant-based resin having less impact on the environment, and thus has highly excellent environmental resistance. The inclusion of the polyamide 11 can provide a plant-based resin-containing composition having less impact on the environment. Further, the inclusion of polyamide 11 and polyphenylene sulfide as a heat resistance resin can improve heat resistance and dimensional stability. Further, the inclusion of glass fiber that functions as a crystal nucleator can increase the crystallinity when molding, and thus mechanical strength properties such as moldability and flexural modulus of elasticity can be improved.

It is preferable that the content of the polyamide 11 is not less than 40 wt% and not greater than 80 wt% relative to the total weight of the resin composition, and more preferably not less than 60 wt% and not greater than 70 wt%. The content of the polyphenylene sulfide preferably is not less than 10 wt% and not greater than 40 wt% relative to the total weight of the resin composition, and more preferably not less than 20 wt% and not greater than 30 wt%. The content of the glass fiber preferably is not less than 5 wt% and not greater than 20 wt% relative to the total weight of the resin composition, and more preferably not less than 10 wt% and not greater than 15 wt%. This is because when the contents fall within the ranges, it is possible to improve resin properties as compared to those of polyamide 11 alone while retaining various properties of the plant-derived polyamide 11.

It is preferable that the glass fiber has an average fiber diameter of not less than 5 µm and not greater than 15 µm, and more preferably not less than 8 µm and not greater than 12 µm. Likewise, the glass fiber preferably has an average fiber length of not less than 1 mm and not greater than 5 mm, and more preferably not less than 2 mm and not greater than 4 mm. The average fiber diameter and average fiber length can be measured by an electron microscope, an optical microscope, or the like.

It is preferable that at least part of the glass fiber is covered by polyphenylene sulfide. This improves the mixing performance between the polyamide 11 and the glass fiber, and thus the glass fiber can be dispersed in the polyamide 11 almost uniformly, which further improves resin properties. In other words, glass fiber is difficult to disperse in polyamide 11, but when at least part of glass fiber is covered by polyphenylene sulfide, the dispersibility thereof in polyamide 11 is improved, and thus the mixing performance between the polyamide 11 and the glass fiber is improved.

Specific examples of the polyphenylene sulfide include poly-p-phenylene sulfide, and poly-m-phenylene sulfide.

As the method of covering the glass fiber with the polyphenylene sulfide, a method can be employed in which the glass fiber and the polyphenylene sulfide in the form of pellets or powders are melted and kneaded by a kneader to form pellets or powders, after which polyamide 11 and the obtained pellets or powders are melted and kneaded by a kneader, and finally to obtain intended pellets.

The plant-based resin-containing composition of the present embodiment may further contain a flame retardant. This improves flame retardancy, and thus flame spread can be suppressed..

It is preferable that the content of the flame retardant is not less than 5 wt% and not greater than 15 wt% relative to the total weight of the plant-based resin-containing composition. This is because when the content falls within this range, it is possible to improvethe flame retardancy while retaining the environmental resistance of the plant-based resin-containing composition.

As the flame retardant, it is preferable to use an organic flame retardant such as a phosphorus-based flame retardant or triazine-based flame retardant. As the phosphorus-based flame retardant, for example, a phosphoric acid ester such as triphenyl phosphate, tricresyl phosphate or trixylenyl phosphate can be used. As the triazine-based flame retardant, for example, a triazine compound such as melamine cyanurate, melamine polyphosphate, or melamine can be used.

The plant-based resin-containing composition of the present embodiment can be blended with other additives such as a plasticizer, a weather resistant modifier, an antioxidant, a heat stabilizer, a light stabilizer, an ultraviolet absorber, a lubricant, a mold release agent, a pigment, a coloring agent, an antistatic agent, a fragrance, a foaming agent, and an antimicrobial/antifungal agent. The addition of these further improves the impact resistance, heat resistance, rigidity, and the like, and at the same time, other properties can be imparted. For the selection of these additives, taking the properties of the plant-derived polyamide 11 into consideration, it is preferable to select materials with less impact on the environment such as materials that are harmless to living organisms and do not emit poisonous gas by combustion.

Next, Embodiment 12 will be described in further detail with reference to examples. However, it should be noted that the present invention is not limited to the examples given below.

### (Example 12-1)

### <Production of Resin Composition>

First, 70 parts by weight of polyamide 11 Rilsan (trade name, melt viscosity: 1.5×10³ Pa·s/230°C) available from Arkema Inc., 20 parts by weight of polyphenylene sulfide Fortron (trade name) available from Polyplastic Co. Ltd., and 10 parts by weight of glass fiber (average fiber diameter: 10 µm, average fiber length: 3 mm) available from Asahi Fiber Glass Co., Ltd. were prepared.

Next, 20 parts by weight of the polyphenylene sulfide Fortron and 10 parts by weight of the glass fiber were melted and kneaded by using a completely intermeshing co-rotating 2 bent type twin screw extruder KZW15 (trade name) available from Technovel Corporation at 300°C. After kneading, the molten material was pushed through the die of the extruder in the form of strands, water-cooled and cut by a pelletizer to produce a resin composition A in the form of pellets.

Subsequently, 70 parts by weight of the polyamide 11 Rilsan and 30 parts by weight of the resin composition A were melted and kneaded by using the completely intermeshing co-rotating 2 bent type twin screw extruder KZW15 at 290°C. After kneading, the molten material was pushed through the die of the extruder in the form of strands, water-cooled and cut by a pelletizer to produce a resin composition B in the form of pellets.

### <Production of Resin Molded Product (Test Piece)>

The resin composition B in the form of pellets was dried at 90°C for 5 hours, and then injection-molded by using a horizontal injection molding machine SG50-SYCAP MIII (trade name) available from Sumitomo Heavy Industries, Ltd. with a mold temperature of 50°C, a cylinder temperature of 280°C, an injection speed of 100 mm/s, a secondary pressure of 40 kgf/cm², and a cooling time of 30 s, so as to so as to form an ASTM flexural test piece (12.7 mm × 127 mm × 3.2 mm).

### (Comparative Example 12-1)

An ASTM flexural test piece was produced in the same manner as in Example 12-1, except that only the polyamide 11 Rilsan was used, and the cylinder temperature was changed to 230°C.

### (Comparative Example 12-2)

An ASTM flexural test piece was produced in the same manner as in Example 12-1, except that 70 parts by weight of the polyamide 11 Rilsan and 30 parts by weight of the polyphenylene sulfide Fortron were used without using the glass fiber.

### (Comparative Example 12-3)

An ASTM flexural test piece was produced in the same manner as in Example 12-1, except that 90 parts by weight of the polyamide 11 Rilsan and 10 parts by weight of the glass fiber were used without using the polyphenylene sulfide, and the cylinder temperature was changed to 230°C.

Table 12-1 shows the compositions of the resin compositions produced in Example 12-1, and Comparative Examples 12-1 to 12-3. In Table 12-1, the polyamide 11 is expressed as PA11, the polyphenylene sulfide is expressed as PPS, and the glass fiber is expressed as GF.

**[Table 12-1]**

| (Unit: part by weight) | | | |
|---|---|---|---|
| | PA11 | PPS | GF |
| Ex. 12-1 | 70 | 20 | 10 |
| Com.Ex.12-1 | 100 | - | - |
| Com. Ex. 12-2 | 70 | 30 | - |
| Com. Ex. 12-3 | 90 | - | 10 |

Next, each of the ASTM test pieces of Example 12-1, and Comparative Examples 12-1 to 12-3 was subjected to the following evaluation tests for resin properties.

### <Evaluation of Moldability>

Moldability was evaluated by observing each test piece for the presence/absence of burrs and sink marks. The results are shown in Table 12-2. The evaluation criteria for moldability were as follows, and the results are shown by very small, small, medium or large in Table 12-2.
(1) Very small: when the maximum values of burrs/sink marks fall from 0 µm/0 µm to 30 µm/20 µm.
(2) Small: when the maximum values of burrs/sink marks fall from 31 µm/21 µm to 60 µm/30 µm.
(3) Medium: when the maximum values of burrs/sink marks fall from 61 µm/31 µm to 100 µm/40 µm.
(4) Large: when the maximum values of burrs/sink marks are not less than 101 µm/41 µm.

**[Table 12-2]**

| | Burr | Sink mark |
|---|---|---|
| Ex. 12-1 | Very small | Very small |
| Com. Ex. 12-1 | Large | Large |
| Com. Ex. 12-2 | Small | Medium |
| Com. Ex. 12-3 | Large | Small |

### <Measurement of Flexural Strength>

Each test piece was used to measure flexural strength. Specifically, the flexural strength test was performed by using a universal tester INSTORON 5581 (trade name) available from Instron® according to JIS K 7203 except for the size of the test pieces. The results are shown in Table 12-3 as flexural modulus of elasticity.

### <Measurement of Izod Impact Strength>

Each test piece was used to measure Izod impact strength. Specifically, the Izod impact test was performed by using an Izod impact tester B-121202403 (trade name) available from Toyo Seiki Seisaku-sho, Ltd. according to JIS K 7110 except for the size of the test pieces. The results are shown in Table 12-3.

### <Measurement of Deflection Temperature under Load>

Each test piece was used to measure deflection temperature under load. Specifically, the deflection temperature under load test was performed by using a heat distortion tester 148HD-PC (trade name) available from Yasuda Seiki Seisakusho, Ltd. according to JIS K 7220 except for the size of the test pieces. The results are shown in Table 12-3.

**[Table 12-3]**

| | Mechanical strength properties | | |
|---|---|---|---|
| | Flexural modulus of elasticity (GPa) | Izod impact strength (J/m) | Deflection temperature under load (°C) |
| Ex. 12-1 | 2.3 | 100 | 110 |
| Com. Ex. 12-1 | 1.0 | 250 | 40 |
| Com. Ex. 12-2 | 1.6 | 140 | 60 |
| Com. Ex. 12-3 | 2.0 | 110 | 90 |

It can be seen from Tables 12-2 and 12-3 that the moldability and mechanical strength properties of Example 12-1 were improved as compared to those of Comparative Example 12-1 in which only polyamide 11 was used, Comparative Example 12-2 in which glass fiber was not used, and Comparative Example 12-3 in which polyphenylene sulfide was not used.

### (Embodiment 13)

The resin composition of the present embodiment contains polyamide 11 and glass fiber having a cross sectional aspect ratio of 1:1.8 to 1:5. The polyamide 11 is a plant-based resin having less impact on the environment, and thus has highly excellent environmental resistance. The use of the polyamide 11 can provide a resin composition having less impact on the environment. Further, the combined use of the polyamide 11 and the glass fiber can suppress the decrease of impact resistance as compared to that of regular glass fiber.

When the aspect ratio of the glass fiber is less than 1:1.8, the decrease of dimensional adaptability cannot be suppressed. Conversely, when the aspect ratio exceeds 1:5, the production becomes difficult. The aspect ratio of the glass fiber can be determined through observation using an electron microscope.

Unlike regular glass fiber having a circular cross-sectional shape, the cross-sectional shape of the glass fiber can be, but is not limited to, for example, elliptic, flat, cocoon-shaped, or the like.

It is preferable that the glass fiber has an average fiber length of not less than 1 mm and not greater than 3 mm. When the average fiber length is less than 1 mm, the effect of suppressing the decrease of impact resistance is small. When the average fiber length exceeds 3 mm, the mixing workability with the resin is decreased. The average fiber length can be measured by an optical microscope, or the like.

It is preferable that the content of the glass fiber is not less than 5 wt% and not greater than 20 wt% relative to the total weight of the resin composition, and more preferably not less than 10 wt% and not greater than 15 wt%. When the content falls within this range, it is possible to suppress the decrease of dimensional adaptability while retaining various properties of the plant-derived polyamide 11.

Further, it is preferable that the resin composition of the present embodiment has a melt viscosity of not less than 2×10² Pa·s. This can suppress burrs more effectively.

It is preferable that the surface of the glass fiber is coated with an epoxy group-containing resin or amino silane-based resin. This strengthens the bonding between the polyamide 11 and the glass fiber, and moldability also is improved. As the epoxy group-containing resin, for example, an epoxy modified acrylic resin, epoxy modified styrene acrylic resin, or the like can be used. As the amino silane-based resin, N-2(aminoethyl)3-aminopropylmethyldimethoxysilane, N-2(aminoethyl)3-aminopropyltrimethoxysilane, N-2(aminoethyl)3-aminopropyltriethoxysilane, 3-aminopropyltrimethoxysilane, 3-aminopropyltriethoxysilane, 3-triethoxysilyl-N-(1,3-dimethyl-butylidene)propylamine, N-phenyl-3-aminopropyltrimethoxysilane, or the like can be used.

Further, similar to Embodiment 8, the resin composition of the present embodiment preferably contains an amorphous resin. This can improve mechanical properties. It is preferable that the content of the amorphous resin is not less than 10 wt% and not greater than 30 wt% relative to the total weight of the resin composition. This is because when the content falls within this range, mechanical properties can be improved while retaining various properties of the plant-derived polyamide 11.

It is preferable to blend the resin composition of the present embodiment with a crystal nucleator in order to facilitate the crystallization of the polyamide 11 to enhance the rigidity and heat resistance. There are an organic nucleator and an inorganic nucleator as crystal nucleators. Examples of the organic nucleator include metal benzoate, and metal organophosphate. Examples of the inorganic nucleator include talc, mica, montmorillonite, and kaoline.

The resin composition of the present embodiment can be blended with other additives such as a flame retardant, a conductive material, an absorbent, a plasticizer, a weather resistant modifier, an antioxidant, a heat stabilizer, a light stabilizer, an ultraviolet absorber, a lubricant, a mold release agent, a pigment, a coloring agent, an antistatic agent, a fragrance, a foaming agent, and an antimicrobial/antifungal agent. The addition of these further improves the impact resistance, heat resistance, rigidity, and the like, and at the same time, other properties can be imparted. For the selection of these additives, taking the properties of the plant-derived polyamide 11 into consideration, it is preferable to select materials with less impact on the environment such as materials that are harmless to living organisms and do not emit poisonous gas by combustion.

The resin composition of the present embodiment can be produced by mixing the above materials, followed by kneading. The kneading can be performed by using an extruder. As the extruder, a single screw extruder or twin screw extruder can be used, but it is preferable to use a co-rotating twin screw extruder because the polyamide 11 pellets and the glass fiber can be mixed more uniformly. The melting temperature is set to 210°C to not greater than 230°C. Further, it is preferable that the glass fiber is supplied to a single screw extruder or twin screw extruder by using a side feeder, or the like.

Next, Embodiment 13 will be described in further detail with reference to examples. However, it should be noted that the present invention is not limited to the examples given below.

### (Example 13-1)

### <Production of Resin Composition>

Ninety-five parts by weight of polyamide 11 pellets Rilsan BESN (trade name, extrusion molding grade) available from Arkema Inc. having been dried at 85°C for 6 hours, and 5 parts by weight of glass fiber CSH 3PA-870 (trade name, cross sectional shape: cocoon-shaped, aspect ratio = 1:2, average fiber length: 3 mm) available from Nitto Boseki Co., Ltd. were kneaded by using a completely intermeshing co-rotating 2 bent type twin screw extruder KZW-30MG (trade name) available from Technovel Corporation at a melting temperature of 250°C. All the supply of the glass fiber was performed using a side feeder. After kneading, the molten material was pushed through the die of the extruder in the form of strands, water-cooled and cut by a pelletizer to produce pellets (resin composition).

### <Production of Resin Molded Product (Test Piece)>

The above pellets were dried at 85°C for 6 hours, and then injection-molded by using a horizontal injection molding machine SG50-SYCAP MIII (trade name) available from Sumitomo Heavy Industries, Ltd. with a mold temperature of 70°C, a cylinder temperature of 250°C, an injection speed of 50 mm/s, a holding pressure of 40 kgf/cm², and a cooling time of 30 seconds, so as to so as to form an ASTM flexural test piece (12.7 mm × 127 mm × 3.2 mm).

### (Example 13-2)

An ASTM flexural test piece was produced in the same manner as in Example 13-1, except that 10 parts by weight of the glass fiber CSH 3PA-870 was used.

### (Example 13-3)

An ASTM flexural test piece was produced in the same manner as in Example 13-1, except that 15 parts by weight of the glass fiber CSH 3PA-870 was used.

### (Comparative Example 13-1)

An ASTM flexural test piece was produced in the same manner as in Example 13-1, except that the glass fiber was not added at all.

### (Comparative Example 13-2)

An ASTM flexural test piece was produced in the same manner as in Example 13-1, except that 5 parts by weight of glass fiber CS 3PE-455 (cross sectional shape: circular, average fiber length: 3 mm) available from Nitto Boseki Co., Ltd. was used instead of the glass fiber CSH 3PA-870.

### (Comparative Example 13-3)

An ASTM flexural test piece was produced in the same manner as in Example 13-1, except that 10 parts by weight of the glass fiber CS 3PE-455 was used.

### (Comparative Example 13-4)

An ASTM flexural test piece was produced in the same manner as in Example 13-1, except that 15 parts by weight of the glass fiber CS 3PE-455 was used.

### <Measurement of Glass Fiber Content>

The amount of glass fiber added when producing the resin composition and the final content of the glass fiber after the production of a resin molded product may not be the same. Particularly when mixing and kneading is performed by supplying the glass fiber by using a side feeder, the amount of glass fiber supplied by a side feeder is not constant, and therefore it is necessary to check the final content. In view of this, the content of the glass fiber of the test pieces were measured in the same manner as in Embodiment 11. The results are shown in Table 13-1. In Table 13-1, the glass fiber content is expressed as GF amount (wt%).

Next, Izod impact strength, flexural strength (flexural modulus of elasticity) and deflection temperature under load were measured in the same manner as in Embodiment 12 using each of the test pieces produced in Examples 13-1 to 13-3, and Comparative Examples 13-1 to 13-4. The results are shown in 13-1.

**[Table 13-1]**

| | GF amount (wt%) | Mold temperature (°C) | Mechanical strength properties | | |
|---|---|---|---|---|---|
| | | | Izod impact strength (J/m) | Flexural modulus of elasticity (GPa) | Deflection temperature under load (°C) |
| Ex. 13-1 | 6 | 70 | 250 | 1.4 | 50 |
| Ex. 13-2 | 8 | 70 | 210 | 1.8 | 95 |
| Ex. 13-3 | 15 | 70 | 200 | 3.5 | 148 |
| Com. Ex. 13-1 | 0 | 70 | 400 | 1 | 42 |
| Com. Ex. 13-2 | 6 | 70 | 250 | 1.3 | 52 |
| Com. Ex. 13-3 | 8 | 70 | 210 | 1.7 | 75 |
| Com. Ex. 13-4 | 15 | 70 | 200 | 3.3 | 141 |

Table 13-1 illustrates that the decrease of Izod impact strength of Examples 13-1 to 13-3, in which the glass fiber having a cross-sectional shape of a cocoon was added, could be suppressed as compared to Comparative Examples 13-2 to 13-4, in which the glass fiber having a circular cross sectional shape were added.

### (Embodiment 14)

The plant-based resin-containing composition of the present embodiment contains polyamide 11, at least one selected from glass fiber, wollastonite and talc, and a flame retardant. The polyamide 11 is a plant-based resin having less impact on the environment, and thus has highly excellent environmental resistance. The inclusion of the polyamide 11 can provide a plant-based resin-containing composition having less impact on the environment. Further, the combined use of the polyamide 11 and at least one filler selected from the group consisting of glass fiber, wollastonite and talc can improve mechanical strength properties such as flexural modulus of elasticity. Further, the addition of a flame retardant can suppress the decrease of flame retardancy caused by the addition of the filler.

It is preferable that the content of the polyamide 11 is not less than 60 wt% and not greater than 80 wt% relative to the total weight of the resin composition, and more preferably not less than 65 wt% and not greater than 70 wt%. The content of the filler preferably is not less than 5 wt% and not greater than 25 wt% relative to the total weight of the resin composition, and more preferably not less than 15 wt% and not greater than 20 wt%. This is because when the contents fall within this ranges, it is possible to improve resin properties as compared to those of polyamide 11 alone while retaining various properties of the plant-derived polyamide 11.

It is preferable that the glass fiber has an average fiber diameter of not less than 5 µm and not greater than 15 µm, and more preferably not less than 8 µm and not greater than 12 µm. Likewise, its average fiber length preferably is not less than 1 mm and not greater than 5 mm, and more preferably not less than 2 mm and not greater than 4 mm. The average fiber diameter and average fiber length can be measured by an electron microscope, optical microscope, or the like.

The wollastonite is a white natural mineral that is fibrous or massive and has a composition of CaO·SiO₂. The wollastonite preferably is in the form of fibers. This improves the melt viscosity of the resin composition, and it is possible to suppress burrs more effectively. It is preferable that the wollastonite has an aspect ratio of 3 to 10, and a fiber length of 1 µm to 180 µm. When the aspect ratio is less than 3, or the fiber length is less than 1 µm, the wollastonite cannot retain its fibrous form. When the aspect ratio exceeds 10, or the fiber length exceeds 180 µm, the surface condition of the resin composition will be deteriorated when formed into a molded product.

It is preferable that the content of the flame retardant is not less than 5 wt% and not greater than 20 wt% relative to the total weight of the resin composition, and more preferably not less than 10 wt% and not greater than 15 wt%. This is because when the content falls within this range, it is possible to improve flame retardancy while retaining the environmental resistance and mechanical strength properties of the plant-based resin-containing composition.

As the flame retardant, it is preferable to use an organic flame retardant such as a phosphorus-based flame retardant, or triazine-based flame retardant. As the phosphorus-based flame retardant, for example, a phosphoric acid ester such as triphenyl phosphate, tricresyl phosphate, or trixylenyl phosphate can be used. As the triazine-based flame retardant, for example, a triazine compound such as melamine cyanurate, or tris-isocyanurate can be used.

The plant-based resin-containing composition of the present embodiment can be further blended with other additives such as a plasticizer, a weather resistant modifier, an antioxidant, a heat stabilizer, a light stabilizer, an ultraviolet absorber, a lubricant, a mold release agent, a pigment, a coloring agent, an antistatic agent, a fragrance, a foaming agent, and an antimicrobial/antifungal agent. The addition of these further improves the impact resistance, heat resistance, rigidity, and the like, and at the same time, other properties can be imparted. For the selection of these additives, taking the properties of the plant-derived polyamide 11 into consideration, it is preferable to select materials with less impact on the environment such as materials that are harmless to living organisms and do not emit poisonous gas by combustion.

Next, Embodiment 14 will be described in further detail with reference to examples. However, it should be noted that the present invention is not limited to the examples given below.

### (Example 14-1)

### <Production of Resin Composition>

First, to 70 parts by weight of polyamide 11 Rilsan (trade name, melt viscosity: 1.5×10³ Pa·s/230°C) available from Arkema Inc., 15 parts by weight of glass fiber (average fiber diameter: 10 µm, average fiber length: 3 mm) available from Nitto Boseki Co., Ltd. and 15 by weight of triphenyl phosphate available from Daihachi Chemical Industry Co., Ltd. as a flame retardant were added, and they were kneaded by using a completely intermeshing co-rotating 2 bent type twin screw extruder KZW15 (trade name) available from Technovel Corporation. After kneading, the molten material was pushed through the die of the extruder in the form of strands, water-cooled and cut by a pelletizer to produce a resin composition in the form of pellets.

### <Production of Resin Molded Product (Test Piece)>

The resin composition in the form of pellets was dried at 90°C for 5 hours, and then injection-molded by using a horizontal injection molding machine SG50-SYCAP MIII (trade name) available from Sumitomo Heavy Industries, Ltd. with a mold temperature of 50°C, a cylinder temperature of 250°C, an injection speed of 100 mm/s, a secondary pressure of 40 kgf/cm², and a cooling time of 30 s, so as to form an ASTM flexural test piece (12.7 mm × 127 mm × 3.2 mm).

### (Example 14-2)

An ASTM flexural test piece was produced in the same manner as in Example 14-1, except that the amount of the glass fiber added was changed to 20 parts by weight, and 10 parts by weight of red phosphorus Nova Pellet (trade name) available from Rinkagaku Kogyo Co., Ltd. as a phosphorus-based flame retardant was added instead of the triphenyl phosphate.

### (Example 14-3)

An ASTM flexural test piece was produced in the same manner as in Example 14-1, except that 15 parts by weight of melamine Melapur available from Ciba Specialty Chemicals Inc. was added instead of the triphenyl phosphate.

### (Example 14-4)

An ASTM flexural test piece was produced in the same manner as in Example 14-1, except that 15 parts by weight of wollastonite PH-450 (trade name) was added instead of the glass fiber.

### (Example 14-5)

An ASTM flexural test piece was produced in the same manner as in Example 14-4, except that the amount of the wollastonite added was changed to 20 parts by weight, and 10 parts by weight of red phosphorus Nova Pellet was added instead of the triphenyl phosphate.

### (Example 14-6)

An ASTM flexural test piece was produced in the same manner as in Example 14-4, except that 15 parts by weight of melamine Melapur available from Ciba Specialty Chemicals Inc. was added instead of the triphenyl phosphate.

### (Example 14-7)

An ASTM flexural test piece was produced in the same manner as in Example 14-1, except that 15 parts by weight of talc MS (trade name) available from Nippon Talc Co., Ltd. was added instead of the glass fiber.

### (Example 14-8)

An ASTM flexural test piece was produced in the same manner as in Example 14-7, except that the amount of talc added was changed to 20 parts by weight, and 10 parts by weight of red phosphorus Nova Pellet was added instead of the triphenyl phosphate.

### (Example 14-9)

An ASTM flexural test piece was produced in the same manner as in Example 14-7, except that 15 parts by weight of melamine Melapur available from Ciba Specialty Chemicals Inc. was added instead of the triphenyl phosphate.

### (Example 14-10)

An ASTM flexural test piece was produced in the same manner as in Example 14-1, except that 65 parts by weight of polyamide 11 Rilsan (melt viscosity: 1.5×10³ Pa·s/230°C), 10 parts by weight of glass fiber (average fiber diameter: 10 µm, average fiber length: 3 mm) available from Asahi Fiber Glass Co., Ltd., 10 parts by weight of wollastonite PH-450, and 10 parts by weight of triphenyl phosphate available from Daihachi Chemical Industry Co., Ltd., and 5 parts by weight of red phosphorus Nova Pellet were used.

### (Example 14-11)

An ASTM flexural test piece was produced in the same manner as in Example 14-10, except that 5 parts by weight of melamine Melapur available from Ciba Specialty Chemicals Inc. was added instead of the red phosphorus Nova Pellet.

### (Example 14-12)

An ASTM flexural test piece was produced in the same manner as in Example 14-10, except that 10 parts by weight of melamine Melapur available from Ciba Specialty Chemicals Inc. was added instead of the triphenyl phosphate.

### (Example 14-13)

An ASTM flexural test piece was produced in the same manner as in Example 14-10, except that 10 parts by weight of talc MS was added instead of the wollastonite.

### (Example 14-14)

An ASTM flexural test piece was produced in the same manner as in Example 14-13, except that 5 parts by weight of melamine Melapur available from Ciba Specialty Chemicals Inc. was added instead of the red phosphorus Nova Pellet.

### (Example 14-15)

An ASTM flexural test piece was produced in the same manner as in Example 14-13, except that 10 parts by weight of melamine Melapur available from Ciba Specialty Chemicals Inc. was added instead of the triphenyl phosphate.

### (Comparative Example 14-1)

An ASTM flexural test piece was produced in the same manner as in Example 14-1, except that only the polyamide 11 Rilsan was used.

### (Comparative Example 14-2)

An ASTM flexural test piece was produced in the same manner as in Example 14-1, except that 80 parts by weight of the polyamide 11 Rilsan and 20 parts by weight of the glass fiber were used.

### (Comparative Example 14-3)

An ASTM flexural test piece was produced in the same manner as in Example 14-1, except that 80 parts by weight of the polyamide 11 Rilsan and 20 parts by weight of the wollastonite PH-450 were used.

### (Comparative Example 14-4)

An ASTM flexural test piece was produced in the same manner as in Example 14-1, except that 80 parts by weight of the polyamide 11 Rilsan and 20 parts by weight of the talc MS were used.

Table 14-1 shows the compositions of the resin compositions produced in Examples 14-1 to 14-15, and Comparative Examples 14-1 to 14-4. In Table 14-1, the polyamide 11 is expressed as PA11, the glass fiber is expressed as GF, the triphenyl phosphate is expressed as TPP, and the melamine cyanurate is expressed as MC.

**[Table 14-1]**

| (Unit: part by weight) | | | | | | | |
|---|---|---|---|---|---|---|---|
| | PA11 | Filler | | | Flame retardant | | |
| | | GF | Wollastonite | Talc | TPP | Red phosphorus | MC |
| Ex. 14-1 | 70 | 15 | - | - | 15 | - | - |
| Ex. 14-2 | 70 | 20 | - | - | - | 10 | - |
| Ex. 14-3 | 70 | 15 | - | - | - | - | 15 |
| Ex. 14-4 | 70 | - | 15 | - | 15 | - | - |
| Ex. 14-5 | 70 | - | 20 | - | - | 10 | - |
| Ex. 14-6 | 70 | - | 15 | - | - | - | 15 |
| Ex. 14-7 | 70 | - | - | 15 | 15 | - | - |
| Ex. 14-8 | 70 | - | - | 20 | - | 10 | - |
| Ex. 14-9 | 70 | - | - | 15 | - | - | 15 |
| Ex. 14-10 | 65 | 10 | 10 | - | 10 | 5 | - |
| Ex. 14-11 | 65 | 10 | 10 | - | 10 | - | 5 |
| Ex. 14-12 | 65 | 10 | 10 | - | - | 5 | 10 |
| Ex. 14-13 | 65 | 10 | - | 10 | 10 | 5 | - |
| Ex. 14-14 | 65 | 10 | - | 10 | 10 | - | 5 |
| Ex. 14-15 | 65 | 10 | - | 10 | - | 5 | 10 |
| Com. Ex. 14-1 | 100 | - | - | - | - | - | - |
| Com. Ex. 14-2 | 80 | 20 | - | - | - | - | - |
| Com. Ex. 14-3 | 80 | - | 20 | - | - | - | - |
| Com. Ex. 14-4 | 80 | - | - | 20 | - | - | - |

Next, each of the ASTM test pieces of Examples 14-1 to 14-15, and Comparative Examples 14-1 to 14-4 was subjected to the following evaluation tests for resin properties.

First, moldability evaluation was performed in the same manner as in Embodiment 1. The results are shown in Table 14-2.

**[Table 14-2]**

| | Burr | Sink mark |
|---|---|---|
| Ex. 14-1 | Large | Medium |
| Ex. 14-2 | Medium | Medium |
| Ex. 14-3 | Medium | Small |
| Ex. 14-4 | Large | Medium |
| Ex. 14-5 | Medium | Medium |
| Ex. 14-6 | Medium | Small |
| Ex. 14-7 | Medium | Small |
| Ex. 14-8 | Medium | Small |
| Ex. 14-9 | Medium | Small |
| Ex. 14-10 | Medium | Small |
| Ex. 14-11 | Medium | Small |
| Ex. 14-12 | Medium | Small |
| Ex. 14-13 | Small | Small |
| Ex. 14-14 | Small | Small |
| Ex. 14-15 | Small | Small |
| Com. Ex. 14-1 | Large | Large |
| Com. Ex. 14-2 | Medium | Medium |
| Com. Ex. 14-3 | Medium | Medium |
| Com. Ex. 14-4 | Small | Small |

Next, the evaluation of flexural strength (flexural modulus of elasticity), Izod impact strength, deflection temperature under load and flame retardancy was performed in the same manner as in Embodiment 1. The results are shown in Table 14-3.

**[Table 14-3]**

| | Mechanical properties | | | Flame retardancy |
|---|---|---|---|---|
| | Flexural modulus of elasticity (GPa) | Izod impact strength (J/m) | Deflection temperature under load (°C) | Combustion time (s) |
| Ex. 14-1 | 2.2 | 140 | 80 | 50 |
| Ex. 14-2 | 2.5 | 120 | 100 | 30 |
| Ex. 14-3 | 2.5 | 120 | 90 | 40 |
| Ex. 14-4 | 1.8 | 130 | 60 | 50 |
| Ex. 14-5 | 2.0 | 120 | 60 | 20 |
| Ex. 14-6 | 2.0 | 110 | 60 | 30 |
| Ex. 14-7 | 2.0 | 110 | 60 | 40 |
| Ex. 14-8 | 2.5 | 110 | 65 | 10 |
| Ex. 14-9 | 2.5 | 100 | 65 | 30 |
| Ex. 14-10 | 2.4 | 140 | 70 | 20 |
| Ex. 14-11 | 2.5 | 140 | 80 | 30 |
| Ex. 14-12 | 2.5 | 120 | 80 | 30 |
| Ex. 14-13 | 2.3 | 130 | 70 | 15 |
| Ex. 14-14 | 2.4 | 130 | 80 | 30 |
| Ex. 14-15 | 2.4 | 110 | 80 | 15 |
| Com. Ex. 14-1 | 1.0 | 300 | 45 | 10 |
| Com. Ex. 14-2 | 2.2 | 150 | 100 | 60 (Forcibly extinguished) |
| Com. Ex. 14-3 | 2.0 | 130 | 60 | 60 (Forcibly extinguished) |
| Com. Ex. 14-4 | 2.0 | 100 | 70 | 60 (Forcibly extinguished) |

Table 14-3 illustrates that the decrease of flame retardancy of Examples 14-1 to 14-15 could be suppressed as compared to Comparative Examples 14-2 to 14-4 whose flame retardancy decreased due to the addition of a filler.

### (Embodiment 15)

Next, a plant-based resin-containing molded product according to another embodiment of the present invention will be described. The plant-based resin-containing molded product of the present embodiment is a resin molded product formed from any of the plant-based resin-containing composition of Embodiments 8 to 14. Thus, it is possible to provide a plant-based resin-containing molded product having highly excellent environmental resistance, and high moldability and mechanical properties.

It is preferable that the resin molded product of the present embodiment is injection-molded at a mold temperature of not less than 65°C. This can further improve moldability.

Further, it is preferable that the resin molded product of the present embodiment is injection-molded at a cylinder temperature of not less than 225°C, and it is preferable that the resin molded product of the present embodiment is injection-molded at a holding pressure of not less than 35 kgf/cm². This can suppress burrs and sink marks more effectively.

There is no particular limitation on the method of molding the resin molded product of the present embodiment, but the resin molded product of the present embodiment can be molded using the resin compositions of Embodiments 8 to 14 by means of injection molding, extrusion molding, blow molding, vacuum molding, compression molding, or the like. As the molding conditions, for example, in the case of injection molding, the conditions can be set as follows. The conditions for drying the resin composition before injection molding can be a drying temperature of 70°C to 100°C, and a drying time of 4 to 6 hours. For injection molding, the mold temperature is 10°C to 85°C, the cylinder temperature is 210°C to 230°C, and the cooling time is 10 to 90 seconds.

The resin molded product of the present embodiment includes, for example, housings for electronic devices such as notebook computers, personal digital assistants (PDAs), cell phones, and car navigation systems.
FIG. 1 is a front view of a housing for a notebook computer illustrating an example of the resin molded product of the present invention. The housing of FIG. 1 can be formed by injection molding.

The present invention may be embodied in other forms without departing from the spirit or essential characteristics thereof. The embodiments disclosed in this application are to be considered as illustrative and not restrictive. The scope of the present invention should be construed in view of the appended claims, rather than the foregoing description, and all changes that come within the meaning and range of equivalency of the claims are intended to be embraced therein.

### Industrial Applicability

As described above, according to the present invention, it is possible to provide a plant-based resin-containing composition that has less impact on the environment and high resin properties. Further, by using the plant-based resin-containing composition of the present invention, a plant-based resin-containing molded product that has high dimensional adaptability and superior mechanical strength properties can be produced, with which outer appearance components for electronic devices such as cell phones and notebook computers can be manufactured.

## Claims

1. A plant-based resin-containing composition comprising polyamide 11 and an amorphous resin,
wherein the amorphous resin is at least one resin selected from the group consisting of ABS resin, AS resin, ASA resin, polyvinyl chloride, polystyrene, polycarbonate, polymethylmethacrylate, modified polyphenylene ether, polysulfone, polyethersulfone and polyarylate.

2. The plant-based resin-containing composition according to claim 1,
wherein the amorphous resin is ABS resin.

3. The plant-based resin-containing composition according to claim 2, further comprising a flame retardant.

4. The plant-based resin-containing composition according to claim 3, further comprising a flame retardant aid.

5. The plant-based resin-containing composition according to claim 2, further comprising a viscosity adjusting agent.

6. The plant-based resin-containing composition according to claim 2, further comprising polycarbonate.

7. The plant-based resin-containing composition according to claim 1,
wherein the amorphous resin is ABS resin,
the plant-based resin-containing composition further comprises a layered silicate, and
the layered silicate is dispersed in the polyamide 11.

8. The plant-based resin-containing composition according to claim 1,
wherein the amorphous resin is a modified polyphenylene ether, and
the plant-based resin-containing composition further comprises an additive.

9. The plant-based resin-containing composition according to claim 8,
wherein the additive is at least one resin selected from the group consisting of polyphenylene sulfide and aromatic polyamide.

10. A plant-based resin-containing molded product formed from the plant-based resin-containing composition according to any one of claims 1 to 9.

11. A plant-based resin-containing composition comprising polyamide 11 and an additive,
wherein the additive is at least one selected from the group consisting of silica, wollastonite, vegetable fiber, glass flake, glass fiber, and talc.

12. The plant-based resin-containing composition according to claim 11,
wherein the additive is silica, and
the silica has an average particle size of not less than 0.01 µm and not greater than 50 µm.

13. The plant-based resin-containing composition according to claim 11,
wherein the additive is wollastonite.

14. The plant-based resin-containing composition according to claim 11,
wherein the additive is vegetable fiber.

15. The plant-based resin-containing composition according to claim 11,
wherein the additive is glass flake, and
the glass flake has an average particle size of not less than 10 µm and not greater than 50 µm.

16. The plant-based resin-containing composition according to claim 11,
wherein the additive is glass fiber, and
the plant-based resin-containing composition further comprises polyphenylene sulfide.

17. The plant-based resin-containing composition according to claim 11,
wherein the additive is glass fiber, and
the glass fiber has a cross sectional aspect ratio of 1:1.8 to 1:5.

18. The plant-based resin-containing composition according to claim 11,
wherein the additive is glass fiber, and
the plant-based resin-containing composition further comprises a flame retardant.

19. The plant-based resin-containing composition according to claim 11,
wherein the additive is talc, and
the plant-based resin-containing composition further comprises a flame retardant.

20. A plant-based resin-containing molded product formed from the plant-based resin-containing composition according to any one of claims 11 to 19.
